(19) Europäisches Patentamt
European Patent Office
Office européen des brevets

(11) **EP 4 556 508 A1**

(12) **EUROPEAN PATENT APPLICATION**
published in accordance with Art. 153(4) EPC

(43) Date of publication:
**21.05.2025 Bulletin 2025/21**

(21) Application number: **23839704.6**

(22) Date of filing: **14.07.2023**

(51) International Patent Classification (IPC):
*C08G 69/48* $^{(2006.01)}$   *C09D 5/36* $^{(2006.01)}$
*C09D 7/43* $^{(2018.01)}$   *C09D 201/00* $^{(2006.01)}$
*C09K 23/42* $^{(2022.01)}$

(52) Cooperative Patent Classification (CPC):
**C08G 69/48; C09D 5/36; C09D 7/43; C09D 201/00;
C09K 23/42**

(86) International application number:
**PCT/JP2023/026056**

(87) International publication number:
**WO 2024/014535 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.07.2022 JP 2022114405**

(71) Applicant: **Kusumoto Chemicals, Ltd.
Tokyo 101-0047 (JP)**

(72) Inventors:
• **SAITO, Toshiki
Soka-shi, Saitama 340-0004 (JP)**
• **NISHIYAMA, Hironori
Soka-shi, Saitama 340-0004 (JP)**

(74) Representative: **Hasegawa, Kan
Patentanwaltskanzlei Hasegawa
Untere Hauptstraße 56
85354 Freising (DE)**

(54) **WATER-BASED COMPOSITION, DILUTED COMPOSITION, AND WATER-BASED COATING COMPOSITION**

(57)     To provide a water-based composition, a diluted composition and an aqueous paint composition capable of imparting viscosity to water, and achieving a sufficient rheology modifying effect even in formulations for which it is difficult to achieve a rheology modifying effect with conventional compositions. A water-based composition contains: a block copolymer (A1) represented by $(X\text{-})_a[R_1(\text{-}W_1\text{-}R_2\text{-}W_2)_b]_m(\text{-}R_1(\text{-}X)_c)_p$; and water, wherein among all X in the block copolymer (A1) represented by the formula (1), X which is Y is 5 mol% or greater, and a mass ratio of the block copolymer (A1) to water, A1/water, is 5/95 to 50/50.

**EP 4 556 508 A1**

**Description**

[Technical Field]

The present invention relates to water-based compositions, diluted compositions and aqueous paint compositions.

[Background Art]

Since aqueous paints are environmentally friendly, the use of aqueous paints is being promoted in various fields, including automotive paints. Such aqueous paints contain various types of rheology control agents for the purpose of, for example, preventing pigments from settling and hard caking in the paint during storage, preventing the paint from sagging during painting, and adjusting the leveling of the paint surface.
As an example of such rheology control agents, PTL 1 discloses an anti-settling agent for aqueous paints, which is prepared by providing a polyamide or the like obtained by reacting a diamine with an excess of dicarboxylic acid or the like relative to the diamine, neutralizing the resulting polyamide or the like with a neutralizing base (such as amine), and then dispersing it in a medium mainly composed of water. Further, PTL 2 discloses the use of a composition composed of a hydrocarbon-polyether-polyamide-polyether-hydrocarbon block copolymer and a specific solvent as a gelling agent for urethane/acrylic paints.

[Citation List]

[Patent Literature]

[Summary of Invention]

[Technical Problem]

However, in the anti-settling agent described in PTL 1, in which only the terminal carboxylic acid is the hydrophilic moiety, the hydrophilicity of the polyamide is insufficient, and a large amount of co-solvent is often required to achieve a rheology modifying effect. On the other hand, due to the influence of laws and regulations limiting the amount of organic solvents released into the environment and the types of organic solvents that can be used, the amount and types of organic solvents and resins in the aqueous paints may be designed differently from conventional ones. Therefore, it may be difficult for the anti-settling agent described in PTL 1 to impart viscosity to formulations with little or no co-solvent in consideration of recent laws and regulations, or to water itself. Further, the gel described in PTL 2 has poor miscibility with water, making it difficult to disperse in aqueous formulations, and even if it is dispersible in water, the rheology modifying effect on water and other aqueous formulations is weak, and the viscosity is insufficient for the purpose of rheology control.
The present invention has been made in view of the above circumstances, and provides a water-based composition capable of imparting viscosity to water, and achieving a sufficient rheology modifying effect even in formulations for which it is difficult to achieve a rheology modifying effect with conventional compositions, and provides a diluted composition and an aqueous paint composition containing the water-based composition.

[Solution to Problems]

As a result of intensive research to achieve the above object, the present inventors have found that, by using, as a rheology control agent, a water-based composition containing a block copolymer and water, the block copolymer having a specific structure containing a carboxyl group at the molecular terminal and containing a polyamide block and a polyether block, it is possible to impart viscosity to water and to achieve a sufficient rheology modifying effect even in formulations for which it is difficult to achieve a rheology modifying effect with conventional compositions. The present invention has been made based on these findings.
That is, the present invention is a water-based composition containing: a block copolymer (A1) represented by the following general formula (1); and water, and among all X in the block copolymer (A1) represented by the formula (1), X which is Y is 5 mol% or greater, and a mass ratio of the block copolymer (A1) to water, A1/water, is 5/95 to 50/50.

$$(X\text{-})_a[R_1(\text{-}W_1\text{-}R_2\text{-}W_2)_b]_m(\text{-}R_1(\text{-}X)_c)_p \ldots \qquad (1)$$

(in the formula (1), X is independently a carboxyl group or a salt thereof, or Y, Y is $R_3\text{-}(OR_4)_n\text{-}Z\text{-}$, $R_1$ is independently a divalent and/or trivalent hydrocarbon group having 2 to 52 carbon atoms, $R_2$ is a divalent hydrocarbon group having 2 to 36

carbon atoms, $R_3$ is a hydrocarbon group having 1 to 22 carbon atoms, $R_4$ is a divalent hydrocarbon group having 2 to 4 carbon atoms, $W_1$ and $W_2$ are secondary amide bonds, Z is an ester bond or an amide bond, a is an integer from 1 to 11, b is 1 or 2, c is 1 or 2, m is an integer from 0 to 10, n is an integer from 2 to 100, and p is an integer from 1 to 11.)

In an aspect of the present invention, the water-based composition may contain the block copolymer (A1) in which at least a part of X in the formula (1) is a carboxyl group or a salt thereof.

In another aspect of the present invention, X which is a carboxyl group or a salt thereof may be 30 mol% or greater relative to a total of X in the block copolymer (A1) contained in the water-based composition.

In another aspect of the present invention, a remaining mass of all the block copolymer (A1) contained in the water-based composition, excluding the Y portion, is 50 mass% or greater and 90 mass% or less relative to a total mass of the block copolymer (A1).

In another aspect of the present invention, the block copolymer (A1) may have an acid value of 15 or greater and 80 or less.

In another aspect of the present invention, 50 mol% or greater of either or both of $R_1$ and $R_2$ in the formula (1) may be a divalent hydrocarbon group having 34 or more carbon atoms.

In another aspect of the present invention, at least a part of X in the formula (1) may be Y, and a mass of $(OR_4)_n$ moiety in which $R_4$ has 2 carbon atoms may be 5 mass% or greater and 45 mass% or less relative to a total mass of the block copolymer (A1). Here, phrase "$R_4$ has 2 carbon atoms" means that $R_4$ is a divalent hydrocarbon group having 2 carbon atoms.

In another aspect of the present invention, the water-based composition may further contain a polyether (B1) represented by the following general formula (2), the polyether (B1) having a boiling point of 230°C or higher, wherein at least a part of X in the formula (1) may be Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) may be 5 mass% or greater and 50 mass% or less relative to a total mass of the block copolymer (A1) and the polyether (B1).

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100.) Here, phrase "$R_6$ has 2 carbon atoms" means that $R_6$ is a divalent hydrocarbon group having 2 carbon atoms.

In another aspect of the present invention, the water-based composition may further contain a polyether (B1) represented by the following general formula (2), the polyether (B1) having a boiling point of 230°C or higher, wherein at least a part of X in the formula (1) may be Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) may be 5 mass% or greater and 50 mass% or less relative to a total mass of a non-volatile component in the water-based composition.

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100.)

In another aspect of the present invention, the water-based composition may contain the block copolymer (A1) in which all X in the formula (1) is Y.

In another aspect of the present invention, among X in the block copolymer (A1) represented by the formula (1), X which is Y may be 80 mol% or greater.

In another aspect of the present invention, the water-based composition may further contain a polyether (B 1) represented by the following general formula (2), the polyether (B1) having a boiling point of 230°C or higher, wherein a mixture of the block copolymer (A1) and the polyether (B1) may have an acid value of 10 or less.

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100.)

In another aspect of the present invention, $R_3$ in the formula (1) may have 1 to 4 carbon atoms.

In another aspect of the present invention, the block copolymer (A1) with m=0 in the formula (1) may be 50 mass% or less relative to a total mass of the block copolymer (A1) contained in the water-based composition.

In another aspect of the present invention, the water-based composition may further contain a polyether (B 1) represented by the following general formula (2), the polyether (B1) having a boiling point of 230°C or higher, wherein at least a part of X in the formula (1) may be Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) may be 50 mass% or greater and 90 mass% or less relative to a total mass of the block copolymer (A1) and the polyether (B1).

$$R_5\text{-}(OR_6)_q\text{-}OR_7 \text{ ...} \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100.)

In another aspect of the present invention, the water-based composition may further contain a polyether (B1) represented by the following general formula (2), the polyether (B1) having a boiling point of 230°C or higher, wherein at least a part of X in the formula (1) may be Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) may be 50 mass% or greater and 90 mass% or less relative to a total mass of a non-volatile component in the water-based composition.

$$R_5\text{-}(OR_6)_q\text{-}OR_7 \text{ ...} \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100.)

Furthermore, the present invention is also a diluted composition obtainable by diluting the above water-based composition, wherein a mass ratio of the block copolymer (A1) to water, A1/water, is 0.01/99.99 to 5/95.

The diluted composition may further contain at least one rheology control agent different from the block copolymer (A1), the rheology control agent being selected from the group consisting of urethane-based rheology control agents, acrylic rheology control agents, cellulose-based modified rheology control agents, polysaccharide-based rheology control agents, amide-based rheology control agents, polyamide-based rheology control agents, urea-based rheology control agents, cellulose nanofibers and inorganic rheology control agents.

Furthermore, in one aspect, the present invention is an aqueous paint composition containing: the above water-based composition; and a luster pigment.

The aqueous paint composition may further contain at least one rheology control agent different from the block copolymer (A1), the rheology control agent being selected from the group consisting of urethane-based rheology control agents, acrylic rheology control agents, cellulose-based modified rheology control agents, polysaccharide-based rheology control agents, amide-based rheology control agents, polyamide-based rheology control agents, urea-based rheology control agents, cellulose nanofibers and inorganic rheology control agents.

[Advantageous Effects of Invention]

According to the present invention, by using, as a rheology control agent, a water-based composition containing a block copolymer and water, the block copolymer having a specific structure containing a carboxyl group at the molecular terminal and containing a polyamide block and a polyether block, it is possible to impart viscosity to water and to achieve a sufficient rheology modifying effect even in formulations for which it is difficult to achieve a rheology modifying effect with conventional compositions. Furthermore, according to the present invention, it is also possible to achieve a dispersion effect of pigments and the like in the aqueous paint by adjusting the formulation in synthesizing the block copolymer.

[Description of Embodiments]

In the following description, preferred embodiments of the present invention will be described in detail.

[Water-Based Composition]

A water-based composition according to the present invention is an additive for use in an aqueous paint composition, and contains: a block copolymer (A1) represented by the following general formula (1); and water.

$$(X\text{-})_a[R_1(\text{-}W_1\text{-}R_2\text{-}W_2)_b]_m(\text{-}R_1(\text{-}X)_c)_p \text{ ...} \qquad (1)$$

(Block Copolymer (A1))

In the above formula (1), X is independently a carboxyl group or a salt thereof, or Y. Y is $R_3\text{-}(OR_4)_n\text{-}Z\text{-}$. $R_1$ is independently a divalent and/or trivalent hydrocarbon group having 2 to 52 carbon atoms. $R_2$ is a divalent hydrocarbon group having 2 to 36 carbon atoms. $R_3$ is a hydrocarbon group having 1 to 22 carbon atoms. $R_4$ is a divalent hydrocarbon group having 2 to 4 carbon atoms. $W_1$ and $W_2$ are secondary amide bonds. Z is an ester bond or an amide bond. a is an integer from 1 to 11. b is 1 or 2. c is 1 or 2. m is an integer from 0 to 10. n is an integer from 2 to 100. p is an integer from 1 to 11.

There are $m$ $R_1$s in $[R_1(-W_1-R_2-W_2)_b]_m$ in formula (1), each of which can be divalent or trivalent. One of the $R_1$s in $[R_1(-W_1-R_2-W_2)_b]_m$ bonds to an atom outside $[R_1(-W_1-R_2-W_2)_b]_m$ and the other bonds to $W_1$, and when $R_1$ is trivalent, it can further bond to X or bond to $W_1$. For example, when m=1 in formula (1), there is one $R_1$ in $[R_1(-W_1-R_2-W_2)_b]_m$, and this $R_1$ can be divalent or trivalent. Each trivalent $R_1$ can bond to X or to $W_1$. Further, when m=2 in formula (1), there are two $R_1$s in $[R_1(-W_1-R_2-W_2)_b]_m$, and possible combinations of these two $R_1$s are divalent-divalent, divalent-trivalent, trivalent-divalent and trivalent-trivalent. Each trivalent $R_1$ can bond to X or to $W_1$. Similarly, there are patterns up to m=10, and for each of m=1 to 10, there are possible combinations of the valence (divalent or trivalent) of $R_1$s in $(-R_1(-X)_c)_p$.

The value of a in formula (1) is maximum when all $R_1$s in $[R_1(-W_1-R_2-W_2)_b]_m$ are trivalent hydrocarbon groups and the $R_1$ is bonded to the leftmost X possible. In this case, X is m plus 1, m being the number of $R_1$s in $[R_1(-W_1-R_2-W_2)_b]_m$. Therefore, when m is at its maximum of 10, a is at its maximum of 11. On the other hand, the value of a is minimum when (i) all $R_1$s in $[R_1(-W_1-R_2-W_2)_b]_m$ are divalent hydrocarbon groups, (ii) $R_1$s in $[R_1(-W_1-R_2-W_2)_b]_m$ include a trivalent hydrocarbon group, and the trivalent $R_1$ is bonded to $W_1$ in $[R_1(-W_1-R_2-W_2)_b]_m$ as much as possible (where m≥1), or (iii) m=0, and the minimum value of a is 1.

When b=2 in formula (1), it indicates that polyamide is branched from $R_1$ in $[R_1(-W_1-R_2-W_2)_b]_m$, which affects the value of p. The value of p is the total number of $[R_1(-W_1-R_2-W_2)_b]_m$ with b=2, plus 1. That is, the amide bond $W_2$ present in formula (1) bonds to $(-R_1(-X)_c)_p$ (where m≥1). Therefore, p is maximum when m is at its maximum of 10, and in this case, there are at most 10 $[R_1(-W_1-R_2-W_2)_b]_m$ with b=2 (b=2 in all of 10 $[R_1(-W_1-R_2-W_2)_b]_m$), so the maximum value of p is 11. On the other hand, p is minimum when m=0, or when m≥1 and all b have b=1, and since the number of $[R_1(-W_1-R_2-W_2)_b]_m$ with b=2 is 0, the minimum value of p is 1.

In formula (1), c is 1 when $R_1$ in $(-R_1(-X)_c)_p$ is a divalent hydrocarbon group, and is 2 when $R_1$ in $(-R_1(-X)_c)_p$ is a trivalent hydrocarbon group.

The block copolymer (A1) is a polyamide-polyether block copolymer containing a polyether block corresponding to the Y portion when X in formula (1) is Y, and a polyamide block corresponding to the portion excluding Y. By using a water-based composition containing the block copolymer (A1) and water, the block copolymer (A) having a specific structure composed of the polyamide block and the polyether block, it is possible to impart viscosity to water and to achieve a sufficient rheology modifying effect even in formulations for which it is difficult to achieve a rheology modifying effect with conventional compositions. Further, by adjusting the formulation in synthesizing the block copolymer (A1) to achieve a specific structure of the polyamide block and the polyether block, it is also possible to achieve a dispersion effect of pigments and the like in the aqueous paint.

Here, the rheology modifying effect in the present invention refers to the effect of increasing (thickening) viscosity of an aqueous paint containing the water-based composition. Further, the dispersion effect in the present invention refers to the effect of uniformly dispersing pigments, carbon nanotubes (CNT) or other fillers in an aqueous paint containing the water-based composition. In the following description, preferred embodiments of the water-based composition according to the present invention will be described in detail.

The block copolymer (A1) is a polyamide-polyether block copolymer obtained by a dehydration reaction of polyamide and polyether.

<Regarding $R_1$>

$R_1$ in formula (1) is a hydrocarbon group derived from a dicarboxylic acid or a tricarboxylic acid in synthesizing polyamide used as a raw material. That is, $R_1$ is a divalent hydrocarbon group obtained by removing two carboxyl groups from the above dicarboxylic acid, or a trivalent hydrocarbon group obtained by three carboxyl groups from the above tricarboxylic acid. The carboxyl groups in the dicarboxylic acid and the tricarboxylic acid remain as unreacted portions, or are used to form amide bonds or ester bonds in synthesis of the block copolymer (A1).

The dicarboxylic acid that can be used may be, for example, at least one carboxylic acid selected from the group consisting of dicarboxylic acids having 4 to 54 carbon atoms. Examples of such dicarboxylic acids include succinic acid, glutaric acid, adipic acid, pimelic acid, suberic acid, azelaic acid, sebacic acid, dodecanedioic acid, maleic acid, fumaric acid, phthalic acid, isophthalic acid, terephthalic acid and dimer acid. Dimer acids are polymerized fatty acids obtained by polymerizing (dimerizing) unsaturated fatty acids (for example, unsaturated fatty acid having 18 or 22 carbon atoms) obtained from vegetable oil such as soybean oil, tall oil, linseed oil, cottonseed oil, or the like. Typically, dimer acids having 36 or 44 carbon atoms or dimer acids with unsaturated sites hydrogenated are commercially available. Examples of such commercially available dimer acids include Pripol 1013, Pripol 1017, Pripol 1004 (all manufactured by Croda Japan K.K.), HARIDIMER 200, HARIDIMER 250, HARIDIMER 270S (all manufactured by Harima Chemicals, Inc.), Tsunodime (registered trademark) 205, Tsunodime 228, Tsunodime 395 (all manufactured by Tsuno Food Industrial Co., Ltd.), and the like. Some commercially available dimer acids contain monomer acids and trimer acids in addition to dimer acids. For example, HARIDIMER 250 contains approximately 10 mass% to 20 mass% of trimer acid, but there are high-purity types, such as Tsunodime 395, in which components other than dimer acid are reduced to the minimum. Although it is possible to use those containing trimer acid or high-purity types, those having low monomer acid content are preferred.

The tricarboxylic acid that can be used may be, for example, at least one carboxylic acid selected from the group consisting of tricarboxylic acids having 4 to 54 carbon atoms. Examples of such tricarboxylic acids include trimer acids and trimesic acids. Trimer acids are polymerized fatty acids obtained based on dimer acids by increasing the trimer acid content by distillation purification or the like. Typically, trimer acids having 54 carbon atoms are commercially available. Examples of such commercially available dimer acids include Pripol 1040 (manufactured by Croda Japan K.K.), Tsunodime (registered trademark) 346 (manufactured by Tsuno Food Industrial Co., Ltd.), and the like. Although commercially available trimer acids contain monomer acids and dimer acids in addition to trimer acids, those having low monomer acid content are preferred.

Further, monocarboxylic acids may also be used in combination with the above-mentioned dicarboxylic acids and/or tricarboxylic acids within a range that does not hinder the effect of the water-based composition according to the present invention. Examples of such monocarboxylic acids include: saturated aliphatic monocarboxylic acids such as acetic acid, propionic acid, butyric acid, valeric acid, caproic acid, enanthic acid, caprylic acid, pelargonic acid, capric acid, lauric acid, myristic acid, palmitic acid, stearic acid, arachidic acid and behenic acid; and unsaturated aliphatic monocarboxylic acid such as oleic acid, linoleic acid, ricinoleic acid, linolenic acid, eicosenoic acid, erucic acid and mixed fatty acids obtained from natural fats and oils (tall oil fatty acid, rice bran fatty acid, soybean oil fatty acid, tallowate, etc.). Examples of the monocarboxylic acids that can be used may further include monocarboxylic acids having a hydroxyl group, such as 12-hydroxystearic acid.

The above dicarboxylic acids and tricarboxylic acids may be used singly or in a mixture of two or more.

<Regarding $R_2$>

$R_2$ in formula (1) is a hydrocarbon group derived from a diamine in synthesizing polyamide used as a raw material of the block copolymer (A1). That is, $R_2$ is a divalent hydrocarbon group obtained by removing two amino groups from the above diamine. The amino group in the diamine is used to form amide bonds in synthesis of the block copolymer (A1).

The diamine that can be used may be at least one amine selected from the group consisting of diamines having 2 to 36 carbon atoms. Examples of such diamines include: aliphatic diamines such as ethylenediamine (EDA), propylenediamine (PDA), tetramethylenediamine (TMDA), pentamethylenediamine (PMDA), hexamethylenediamine (HMDA), octamethylenediamine (OMDA), dodecamethylenediamine (DMDA) and trimethylhexamethylenediamine; aromatic diamines such as ortho-xylenediamine, meta-xylenediamine (MXDA), para-xylenediamine (PXDA) and diaminodiphenylmethane; and cycloaliphatic diamines such as isophorone diamine.

Examples of the diamines that can be used may further include diamines derived from polymerized fatty acids, which are polymerized fatty acid derivatives. Examples of such polymerized fatty acid derivatives include dimer diamines (DDA), which are dimer acid derivatives. Dimer diamines are dimer acid derivatives in which two terminal carboxyl groups of the dimer acid are substituted with primary aminomethyl groups or amino groups, and those commercially available can be used. Examples of such commercially available dimer diamines include Priamine 1075, Priamine 1074 (all manufactured by Croda Japan K.K.), Versamine 551 (manufactured by BASF Japan Ltd.), and the like.

Further, monoamines may also be used in combination with the above-mentioned diamines within a range that does not hinder the effect of the water-based composition according to the present invention. Examples of such monoamines include ethylamine, monoethanolamine, propyl amine, butyl amine, pentyl amine, hexyl amine, octyl amine, decyl amine, lauryl amine, myristyl amine, cetyl amine, stearyl amine and behenyl amine.

The above diamines may be used singly or in a mixture of two or more.

<Regarding m>

As described above, m in formula (1) is an integer from 0 to 10. If m exceeds 10, the rheology modifying effect and dispersion effect required in the present invention cannot be achieved. From the viewpoint of improving the rheology modifying effect, it is preferred that the amount of m=0 is small. Specifically, the component with m=0 in the block copolymer (A1) is preferably 50 mass% or less, more preferably 30 mass% or less, and still more preferably 15 mass% or less. The closer the acid/amine ratio is to 1, the less the component with m=0. In order to determine the amount of component with m=0, first, gel permeation chromatography (GPC) of the polyamide before reacting with the polyether is measured to determine the mass% of m=0. Next, assuming that the reactive groups of the component with m=0 and the component with m=1 or greater have the same reactivity, it can be calculated from the mass of the component with m=0 and the mass of A1 as a whole, taking into account the mass increase when polyether is reacted. For example, in a polyamide obtained by reacting a high-purity type dimer acid, which is easy to analyze, (an example of a commercially available product is Tsunodime 395) with ethylene diamine (EDA), the component with m=0 is 50 mass% when the acid/amine ratio=3.8, the component with m=0 is 30 mass% when the acid/amine ratio=2.4, and the component with m=0 is 15 mass% when the acid/amine ratio=1.7. When other raw materials are used, the amount of m=0 is similar although there are some differences. The value calculated from the molecular weight of the polyether and the amount of reactive groups of each component is the mass% of the component with m=0. The above description is for the case where components corresponding to m=0 are not added after synthesis of the polyamide, and if components corresponding to m=0 are added, they must all be combined and recalculated.

As described above, X in formula (1) is independently a carboxyl group or a salt thereof, or Y: $R_3$-$(OR_4)_n$-Z-. Examples of the salt of a carboxyl group include neutral salts of carboxyl groups with the following neutralizing bases. Examples of the neutralizing bases include alkali metal elemental hydroxides such as sodium hydroxide and potassium hydroxide; ammonia as inorganic amine; alkylamines such as ethylamine and diethylamine, amino alcohols such as 2,2',2''-nitrilotriethanol, 2,2'-iminodiethanol, 2-(dimethylamino)ethanol, 2-(diethylamino)ethanol and 2-amino-2-methyl-1-propanol, polyether amines such as JEFFAMINE (registered trademark) M-1000 and JEFFAMINE M-2070 (all manufactured by Huntsman Corporation), and the like.

The polyether used as a raw material in synthesizing the block copolymer (A1) is represented by the formula: $R_3$-$(OR_4)_n$-$Z_T$ (where $R_3$ is a hydrocarbon group having 1 to 22 carbon atoms, $R_4$ is a divalent hydrocarbon group having 2 to 4 carbon atoms, $Z_T$ is an amino group, a hydroxyl group or a carboxyl group, in particular preferably an amino group or a hydroxyl group, n is an integer from 2 to 100, in particular preferably 2 to 50, and more preferably 5 to 50). $Z_T$ becomes Z (that is, an ester bond or an amide bond) by a dehydration reaction of the polyamide and the polyether described above.

<Regarding $R_3$>

The above $R_3$ is not particularly limited as long as it is a monovalent aliphatic hydrocarbon group or aromatic hydrocarbon group having 1 to 22 carbon atoms, and it may be a saturated or unsaturated hydrocarbon group, and may be linear, branched or cyclic.

Examples of the aliphatic hydrocarbon group include an alkyl group, an alkenyl group, an alkynyl group, a cycloalkyl group, a cycloalkenyl group, a cycloalkynyl group, and the like. The alkyl group, alkenyl group and alkynyl group may be linear or branched. The cycloalkyl group, cycloalkenyl group and cycloalkynyl group may be monocyclic or polycyclic.

Examples of the alkyl group include a methyl group, an ethyl group, a propyl group, a hexyl group, a 2-ethylhexyl group, a dodecyl group, a tetradecyl group, a hexadecyl group, an octadecyl group, a docosyl group, and the like. Examples of the cycloalkyl group include a cyclohexyl group, a norbornyl group, and the like.

Examples of the aromatic hydrocarbon group include an aryl group, and the like. The aromatic hydrocarbon may be monocyclic or polycyclic. Examples of the monocyclic aryl group include a phenyl group, and examples of the polycyclic aryl group include a naphthyl group.

$R_3$ may be a combination of an aliphatic hydrocarbon group and an aromatic hydrocarbon group. Examples of such hydrocarbon groups include an aryl alkylene group such as a benzyl group, an alkyl arylene group such as tolyl group, and a dialkyl arylene group such as a xylyl group. Further, $R_3$ may be a combination of two or more aromatic hydrocarbon groups. Examples of such hydrocarbon groups include an aryl arylene group such as a biphenyl group, and an aryl alkylene arylene group such as a styrenated phenyl group.

<Regarding $R_4$>

$R_4$ is not particularly limited as long as it is a divalent aliphatic hydrocarbon group having 2 to 4 carbon atoms, and may be a saturated hydrocarbon group or an unsaturated hydrocarbon group, and may be linear, branched or cyclic. However, it is particularly preferably a saturated linear hydrocarbon group or a saturated branched hydrocarbon group. In particular, those having 2 to 3 carbon atoms are preferred, and those having 2 carbon atoms are more preferred. Further, it may contain a different number of carbon atoms or different shapes. Even when it contains a different number of carbon atoms, it preferably contains 2 to 3 carbon atoms, and more preferably 2 carbon atoms. In addition, when it contains a different number of carbon atoms, it preferably contains 50 mol% or greater, more preferably 75 mol% or greater, of a component having 2 carbon atoms. It is possible to "contain 50 mol% or greater of a component having 2 carbon atoms" by using a polyether in which $R_4$ has 2 carbon atoms as a raw material in synthesizing the block copolymer (A1) in an amount of 50 mol% or greater of the total polyether raw material.

Examples of the aliphatic hydrocarbon group include an alkylene group, an alkenylene group, an alkynylene group, a cycloalkylene group, a cycloalkenylene group, and the like. The alkylene group, alkenylene group and alkynylene group may be linear or branched. Examples of the alkylene group include an ethylene group, a propylene group, and the like.

<Preferred Structure Example of Block Copolymer (A1)>

In the water-based composition of the present invention, among all X in the block copolymer (A1) represented by the formula (1), X which is Y is 5 mol% or greater. If the amount is less than 5 mol%, the rheology modifying effect and dispersion effect required in the present invention cannot be achieved. The mol% of the Y portion can be controlled by adjusting the polyamide/polyether ratio in synthesis of the block copolymer (A1), but if the reaction yield is not 100%, the reaction yield should be considered. Furthermore, analysis by $^1$H-NMR is also possible.

From the viewpoint of improving the rheology modifying effect, the water-based composition of the present invention preferably contains the block copolymer (A1) in which at least a part of X in formula (1) is a carboxyl group or a salt thereof. In this case, X which is a carboxyl group or a salt thereof is preferably 30 mol% or greater, more preferably 40 mol% or greater, and still more preferably 50 mol% or greater, relative to the total of X in the block copolymer (A1) contained in the water-based composition. The amount of X which is a carboxyl group or a salt thereof can be controlled by adjusting the polyamide/polyether ratio in synthesis of the block copolymer (A1), but if the reaction yield is not 100%, the reaction yield should be considered. Furthermore, analysis by $^1$H-NMR is also possible.

From another viewpoint of improving the rheology modifying effect, the remaining mass of all the block copolymers (A1) contained in the water-based composition, excluding the Y portion, is preferably 50 mass% or greater and 90 mass% or less relative to the total mass of the block copolymer (A1). The remaining mass of the block copolymers (A1) excluding the Y portion can be controlled by adjusting the feed amount of polyamide/feed amount of polyether in synthesis of the block copolymer (A1), but if the reaction yield is not 100%, the reaction yield should be considered. It is also possible to analyze by $^1$H-NMR using an internal standard.

From still another viewpoint of improving the rheology modifying effect, the block copolymer (A1) preferably has an acid value of 15 or greater and 80 or less, more preferably 15 or greater and 60 or less, and still more preferably 15 or greater and 50 or less. If the acid value of the block copolymer (A1) is less than 15, the acid-base interaction of the block copolymer (A1) becomes too small, reducing the thickening effect, and if the acid value exceeds 80, the molecular weight of the block copolymer (A1) becomes too small, reducing the thickening effect. The high acid value of the block copolymer (A1) means that the polyamide moiety has a low molecular weight and the amount of the polyether moiety is small.

The acid value described herein can be measured according to JIS K 0070-1992. The acid value refers to the quantity in mg of potassium hydroxide required to neutralize free fatty acids and the like contained in 1 g of a sample. Methods of measuring the acid value include a neutralization titration method and a potentiometric titration method, but the acid value described herein is a value measured by the neutralization titration method. Further, the reaction yield can be determined by using the acid value measured by this method. The acid value of the polyamide/polyether mixture before the reaction is taken as 0% reaction yield, and the theoretical acid value is taken as 100% reaction yield.

From still another viewpoint of improving the rheology modifying effect, 50 mol% or greater of either or both of $R_1$ and $R_2$ in formula (1) is preferably a divalent hydrocarbon group having 34 or more carbon atoms.

From still another viewpoint of improving the rheology modifying effect, it is preferred that at least a part of X in formula (1) is Y, and the mass of $(OR_4)_n$ moiety in which $R_4$ has 2 carbon atoms is 5 mass% or greater and 45 mass% or less relative to the total mass of the block copolymer (A1). The above mass% of $(OR_4)_n$ moiety can be obtained by calculating the mass of $(OR_4)_n$ in which $R_4$ has 2 carbon atoms among the feed amount of polyether raw material, dividing the mass of $(OR_4)_n$ in which $R_4$ has 2 carbon atoms by the total mass, the total mass being the total amount of the feed amount of polyamide and the feed amount of polyether excluding the amount of dehydrated portion, and converting the result into a percentage. If there is an unreacted raw material, it is necessary to calculate an unreacted portion from the reaction yield, and to remove the amount of unreacted portion from the mass ratio of $(OR_4)_n$ calculated as above. It is also possible to analyze by $^1$H-NMR using an internal standard.

From still another viewpoint of improving the rheology modifying effect, it is preferred that the water-based composition further contains a polyether (B1) represented by the following general formula (2), the polyether (B1) having a boiling point of 230°C or higher, wherein at least a part of X in formula (1) is Y, and the total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is preferably 5 mass% or greater and 50 mass% or less relative to the total mass of the block copolymer (A1) and the polyether (B 1).

$$R_5\text{-}(OR_6)_q\text{-}OR_7 \ ... \qquad (2)$$

In the above formula (2), $R_5$ is a hydrocarbon group having 1 to 22 carbon atoms. $R_6$ is a divalent hydrocarbon group having 2 to 4 carbon atoms. $R_7$ is a hydrogen atom or a hydrocarbon group having 1 to 4 carbon atoms. q is an integer from 2 to 100.

The total mass of $(OR_4)_n$ moiety in which $R_4$ has 2 carbon atoms in the block copolymer (A1) and $(OR_6)_q$ moiety in which $R_6$ has 2 carbon atoms in the polyether (B1) can be calculated from the mass and feed amount of $(OR_4)_n$ in which $R_4$ has 2 carbon atoms in the block copolymer (A1) and the mass and feed amount of $(OR_6)_q$ in which $R_6$ has 2 or more carbon atoms in the polyether (B 1), and the total mass is divided by the total of the feed amount of the block copolymer (A1) and the feed amount of the polyether (B1) to calculate the ratio of the total mass (mass%) of the $(OR_4)_n$ moiety and $(OR_6)_q$ moiety. It is also possible to analyze by $^1$H-NMR using an internal standard.

The polyether (B1) in which $R_7$ is H is an example of polyether used as a raw material in synthesizing the block copolymer (A1). $R_5$ and $R_6$ are the same as the above $R_3$ and $R_4$, respectively. q is the same as the above n.

When $R_7$ is a hydrocarbon group having 1 to 4 carbon atoms, $R_7$ is not particularly limited as long as it is a monovalent aliphatic hydrocarbon group having 1 to 4 carbon atoms, and it may be a saturated or unsaturated hydrocarbon group, and may be linear, branched or cyclic. Examples of the aliphatic hydrocarbon group include an alkyl group, an alkenyl group, an alkynyl group, a cycloalkyl group, a cycloalkenyl group, and the like. The alkyl group and alkenyl group may be linear or branched. Examples of the alkyl group include a methyl group, an ethyl group, a propyl group, and the like. Examples of the cycloalkyl group include a cyclopropyl group, and the like.

From still another viewpoint of improving the rheology modifying effect, it is preferred that the water-based composition further contains the above polyether (B 1), wherein at least a part of X in formula (1) is Y, and the total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is preferably 5 mass% or greater and 50 mass% or less relative to a total mass of a non-volatile component in the water-based composition. The total mass of $(OR_4)_n$ moiety in which $R_4$ has 2 carbon atoms in the block copolymer (A1) and $(OR_6)_q$ moiety in which $R_6$ has 2 carbon atoms in the polyether (B1) can be calculated from the mass and feed amount of $(OR_4)_n$ in which $R_4$ has 2 carbon atoms in the block copolymer (A1) and the mass and feed amount of $(OR_6)_q$ in which $R_6$ has 2 or more carbon atoms in the polyether (B 1), and the total mass of $(OR_4)_n$ moiety and $(OR_6)_q$ moiety is divided by the total of the feed amount of the block copolymer (A1), the feed amount of the polyether (B 1), and other non-volatile components optionally added to calculate the ratio of the total mass (mass%) of the $(OR_4)_n$ moiety and $(OR_6)_q$ moiety. In addition, when identifying the total mass of the $(OR_4)_n$ moiety and $(OR_6)_q$ moiety by analysis, it can be determined as follows. A solution containing the synthesized block copolymer (A1) is dried to remove volatile components, and then the ratio of the total mass (mass%) of the $(OR_4)_n$ moiety in which $R_4$ has 2 carbon atoms and $(OR_6)_q$ moiety in which $R_6$ has 2 or more carbon atoms can be determined by $^1$H-NMR using an internal standard. Any internal standard can be used as long as the peak of a target to be quantified and the reference peak of the internal standard are separated, and it is soluble in the measurement solvent. For example, dimethyl terephthalate can be used.

From still another viewpoint of improving the rheology modifying effect, a hydrophobic solid (crystalline substance) may be further added to the block copolymer (A1) represented by the formula (1). Any hydrophobic solid can be used as long as it is insoluble in water and is solid at room temperature. Examples include amide wax, hydrogenated castor oil, polyethylene, and polyethylene wax such as oxidized polyethylene wax.

Furthermore, from the viewpoint of improving the dispersion effect, the water-based composition preferably contains the block copolymer (A1) in which all X in formula (1) is Y. In this case, it is preferred that the block copolymer (A1) in which all X in formula (1) is Y is 80 mol% or greater. The amount (mol%) of those in which X is Y is equal to the reaction yield when the reactive group ratio of polyether/polyamide in synthesizing the block copolymer (A1) is 1 or greater. When the reactive group ratio of polyether/polyamide is less than 1, it can be calculated by multiplying this ratio by the reaction yield. Furthermore, analysis by $^1$H-NMR is also possible.

From another viewpoint of improving the dispersion effect, it is preferred that the water-based composition further contains the above polyether (B1), and a mixture of the block copolymer (A1) and the polyether (B1) has an acid value of 10 or less. The lower the acid value of the mixture, the more effective the dispersion of the pigments and the like by the water-based composition of the present invention. The method for measuring the acid valued is as described above.

From still another viewpoint of improving the dispersion effect, $R_3$ in formula (1) preferably has 1 to 4 carbon atoms, and more preferably 1 carbon atom.

From still another viewpoint of improving the dispersion effect, the block copolymer (A1) with m=0 in formula (1) is preferably 50 mass% or less relative to a total mass of the block copolymer (A1) contained in the water-based composition.

From still another viewpoint of improving the dispersion effect, it is preferred that the water-based composition further contains the above polyether (B 1), wherein at least a part of X in formula (1) is Y, and the total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is 50 mass% or greater and 90 mass% or less relative to the total mass of the block copolymer (A1) and the polyether (B 1).

From still another viewpoint of improving the dispersion effect, it is preferred that the water-based composition further contains the above polyether (B 1), wherein at least a part of X in formula (1) is Y, and the total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is 50 mass% or greater and 90 mass% or less relative to a total mass of a non-volatile component in the water-based composition.

(Water)

The water-based composition according to the present invention is for use in aqueous paints, and can be obtained by dispersing the block copolymer (A1) as an active ingredient and the like in a medium mainly composed of water. For example, deionized water (ion-exchanged water) can be used as water. In the water-based composition of the present invention, viscosity can be imparted to water by setting the mass ratio of the block copolymer (A1) to water within a specific range.

(Mass Ratio of Block Copolymer (A1) to Water)

In the water-based composition of the present invention, the mass ratio of the block copolymer (A1), A1/water, is set to 5/95 to 50/50. If the A1/water is less than 5/95, the rheology modifying effect and dispersion effect required in the present invention cannot be achieved, or the amount of active ingredients is small, which is not economical. If the A1/water exceeds 50/50, the amount of the block copolymer (A1) relative to water is too large, and the block copolymer (A1) is not sufficiently dispersed in the water-based composition. Therefore, the rheology modifying effect and dispersion effect required in the present invention cannot be achieved. From the viewpoint of further improving the rheology modifying effect and dispersion effect, the lower limit of the A1/water is preferably 10/90 or greater. On the other hand, the upper limit of the A1/water is preferably 40/60 or less, more preferably 35/65 or less, and still more preferably 30/70 or less.

(Other Components)

The water-based composition of the present invention may contain auxiliary agents (other components) for imparting other functions. For example, various auxiliary agents may be added to improve gloss retention of the coating film, dispersibility of pigments, defoaming of the aqueous paint composition and flow properties of the aqueous paint composition, and the like. Typical examples of the auxiliary agents for the water-based composition of the present invention include neutralizing bases, solvents, surfactants, and the like described below.

<Neutralizing Base>

For example, the water-based composition according to the present invention may contain a neutralizing base such as amines for dispersing the block copolymer (A1) in a medium mainly composed of water (that is, as a hydrophilization auxiliary agent for facilitating hydrophilization of the block copolymer (A1)). The content of the neutralizing base is preferably 150 mol% or less, and more preferably 110 mol% or less, relative to the total amount of acid in the water-based composition.

The neutralizing base may be an organic base or an inorganic base. Examples of the organic base include alkylamines such as ethylamine, diethylamine and triethylamine; alcoholamines such as ethanolamine, diethanolamine (also referred to as 2,2'-iminodiethanol), triethanolamine (also referred to as 2,2',2''-nitrilotriethanol), N,N-dimethylethanolamine (also referred to as 2-(dimethylamino)ethanol), 2-(diethylamino)ethanol and 2-amino-2-methyl-1-propanol; polyether amines such as JEFFAMINE (registered trademark) M-1000 and JEFFAMINE M-2070 (all manufactured by Huntsman Corporation), and the like. Examples of the inorganic base include sodium hydroxide, potassium hydroxide, ammonia, and the like. These may be used singly or in combination of two or more.

<Solvent>

The water-based composition according to the present invention may contain a solvent other than water for facilitating dispersion of the block copolymer (A1) in a medium mainly composed of water. The first solvent (C) is not particularly limited, and a solvent having at least one substituent selected from the group consisting of a hydroxyl group, an ether group, an ester group, an amide group and a ketone group can be used. Examples of the solvent include alcohol-based solvents, glycol ether-based solvents, diglycol ether-based solvents, triglycol ether-based solvents, ester-based solvents and amide-based solvents. However, the diglycol-based solvents and triglycol-based solvents in the first solvent (C) do not include those corresponding to the polyether (B1). For example, the alcohol-based solvents include monohydric alcohols such as aliphatic alcohols and cyclic alcohols, and the like. Examples of the aliphatic alcohols include methanol, ethanol, propanol, butanol, isobutanol, isopropanol, pentanol, hexanol, heptanol, octanol and 2-ethylhexanol. Examples of the cyclic alcohols include benzyl alcohol. Examples of the glycol ether-based solvents include ethylene glycol monomethyl ether, ethylene glycol monoisopropyl ether, ethylene glycol monobutyl ether (also referred to as 2-butoxyethanol), ethylene glycol monoisobutyl ether, ethylene glycol monohexyl ether, 2-ethylhexyl glycol, propylene glycol monomethyl ether, propylene glycol monopropyl ether, propylene glycol monobutyl ether, phenyl glycol, ethylene glycol dimethyl ether, ethylene glycol dibutyl ether, propylene glycol dimethyl ether, and the like. Examples of the diglycol ether-based solvents include diethylene glycol monomethyl ether, diethylene glycol monoethyl ether, dipropylene glycol monomethyl ether, diethylene glycol dimethyl ether, dipropylene glycol dimethyl ether, and the like. Examples of the triglycol ether-based solvents include triethylene glycol dimethyl ether, and the like. Examples of the ester-based solvents include dibasic esters such as methyl glutarate, methyl succinate and methyl adipate; ethyl acetate, butyl acetate, hexyl acetate, heptyl acetate, propylene glycol monomethyl acetate, amyl propionate, ethyl ethoxypropionate, trimethyl pentanediol monoisobutyrate (also known as Texanol), and the like. Examples of the amide-based solvents include acyclic amides such as dimethylformamide, diethylformamide, dimethylacetamide, 3-methoxy-N,N-dimethylpropanamide and hexamethylphosphoramide, cyclic amides such as N-methylpyrrolidone, and the like. Examples of the solvent further include polyhydric alcohols such as ethylene glycol, propylene glycol, butylene glycol, glycerin, sorbitol, xylitol, and the like. The above solvents may be used singly or in combination of two or more.

<Surfactant>

The water-based composition according to the present invention may contain a surfactant as an optional component. The surfactant is used as a hydrophilization auxiliary agent for hydrophilizing the block copolymer (A1) and facilitating dispersion of the block copolymer (A1) in a medium mainly composed of water. Examples of the surfactant that can be used include the above polyether (B 1). Further examples that can be used include, in addition to the polyether (B1), polyoxyethylene carboxylic acid esters such as polyoxyethylene hydrogenated castor oil, polyoxyethylene castor oil, polyoxyethylene stearic acid ester, polyoxyethylene lauric acid ester and polyoxyethylene oleic acid ester; polyoxyethylene glycerin fatty acid esters such as polyoxyethylene hydrogenated castor oil monoisostearate, polyoxyethylene hydrogenated castor oil triisostearate and polyoxyethylene glyceryl monoisostearate; polyoxyethylene sorbitan aliphatic esters such as polyoxyethylene sorbitan monostearate; polyoxyethylene oxypropylene copolymer, other nonionic surfactants, anionic surfactants such as sodium laurate, ammonium laurate, sodium stearate, ammonium stearate, sodium lauryl sulfate, sodium dodecyl sulfate, sodium dodecyl benzene sulfate, sodium polyoxyethylene lauryl ether acetate and potassium polyoxyethylene alkyl ether phosphate, polymeric surfactants, and the like.

(Other Effects)

In addition, according to the water-based composition of the present invention, the viscosity of paints can be improved to thereby control the orientation of scaly pigments when applied, and this effect can be used to improve the flip-flop properties of metallic paints and the appearance of the coating film. For example, in order to obtain a coating film with high flip-flop properties, it is advantageous to have a low viscosity at a high shear rate such as during coating and a high viscosity at a low shear rate such as after coating. Therefore, the use of a material that exhibits such viscosity as the water-based composition of the present invention makes it possible to provide a coating film exhibiting high flip-flop properties.

(Combined Use with Other Rheology Control Agents)

A diluted composition and an aqueous paint composition using the water-based composition of the present invention can be used in combination of other rheology control agents. Other rheology control agents can be used in combination to provide rheological properties different from that of the water-based composition of the present invention. For example, when combined with a rheology control agent that thickens at high shear rates, it is possible to thicken at both high and low shear rates. Examples of the rheology control agents capable of thickening at high shear rates include rheology control agents using urethane-based rheology control agents, acrylic rheology control agents, cellulose-based modified rheology control agents, polysaccharide-based rheology control agents, and the like. Other examples of the rheology control agents that can be used in combination include amide-based rheology control agents, polyamide-based rheology control agents, urea-based rheology control agents, cellulose nanofibers (CNF), inorganic rheology control agent, and the like.
The urethane-based rheology control agents are not particularly limited, and examples thereof include ADEKA NOL (registered trademark) UH-752, ADEKA NOL UH-540, ADEKA NOL UH-420 (all manufactured by Adeka Corporation), ACRYSOL RM-2020NPR, RM-8W, RM-12W (all manufactured by Dow Chemical Co.), SN-THICKENER 612, SN-THICKENER 621N (all manufactured by San Nopco Limited), RHEOLATE (registered trademark) 244, RHEOLATE 278 (manufactured by Elementis Japan K.K.), TAFIGEL (registered trademark) PUR-45, TAFIGEL PUR-61 (manufactured by MUNZING), and the like. The acrylic rheology control agents are not particularly limited, and examples thereof include DISPARLON (registered trademark) AQ-001, DISPARLON AQ-002, DISPARLON AQ-021 (all manufactured by Kusumoto Chemicals, Ltd.), RHEOVIS (registered trademark) AS1130 (manufactured by BASF Societas Europaea), ACRYSOL ASE-60, ACRYSOL TT-615 (all manufactured by Dow Chemical Co.), SN-THICKENER 617, SN-THICKENER 630, SN-THICKENER 640 (all manufactured by San Nopco Limited), THIXOL (registered trademark) K-1000 (manufactured by Kyoeisha Chemical Co., LTD.), and the like. The cellulose-based modified rheology control agents are not particularly limited, and examples thereof include carboxymethyl cellulose, hydroxyethyl cellulose, hydroxypropyl cellulose, methyl cellulose, ethyl cellulose, and the like. Commercially available products include HEC DAICEL (registered trademark) SP600N (manufactured by Daicel Corporation), CELLOSIZE QP-4400-H, CELLOSIZE QP-52000-H (all manufactured by Dow Chemical Co.), and the like. The polysaccharide-based rheology control agents are not particularly limited, and examples thereof include xanthan gum, carrageenan, guar gum, and the like. The amide-based rheology control agents are not particularly limited, and examples thereof include those described in WO 2022/097747. The polyamide-based rheology control agents are not particularly limited, and examples thereof include DISPARLON AQ-600, DISPARLON AQ-630, DISPARLON AQ-633E, DISPARLON AQH-800, DISPARLON AQH-810 (all manufactured by Kusumoto Chemicals, Ltd.), THIXOL W-310P, THIXOL W-400LP (all manufactured by Kyoeisha Chemical Co., LTD.), A-S-A TW-121, A-S-A TW-124 (all manufactured by Itoh Oil Chemicals Co., Ltd.), RHEOBYK (registered trademark)-440 (manufactured by Byk-Chemie), and the like. The urea-based rheology control agents are not particularly limited, and examples thereof include RHEOBYK-420 (manufactured by Byk-Chemie), and the like. The CNF is not particularly limited, and examples thereof include TEMPO-oxidized CNF, carboxymethylated CNF, phosphate-esterified CNF, sulfate esterified CNF, mechanically defibrated CNF, bacterial CNF, and the like. The inorganic rheology control agents are not particularly limited, and may be natural or synthetic minerals. Examples thereof include silicate clay minerals such as sepiolite, bentonite and hectorite, and commercially available products include PANGEL (registered trademark) AD (manufactured by Tolsa S.A.), LAPONITE (registered trademark) RD, LAPONITE RDS (all manufactured by Byk-Chemie), BENTONE (registered trademark) EW (manufactured by Elementis Japan K.K.), and the like. These may be used singly or in combination of two or more when used in combination with a diluted composition or an aqueous paint composition using the water-based composition of the present invention.

(Method for Producing Water-based Composition)

First, polyamide and polyether which are raw materials in synthesizing the block copolymer (A1) are prepared. Then, the prepared polyamide and polyether are subjected to a dehydration reaction to obtain a block copolymer (A1). Further, by dispersing the block copolymer (A1) in water, a water-based composition of the present invention can be obtained. When the block copolymer (A1) is dispersed in water, the above-mentioned neutralizing base or solvent may be added as necessary.

<Synthesis of Polyamide>

The polyamide used in synthesis of the block copolymer (A1) according to the present invention can be synthesized by polycondensation reaction of the above-mentioned diamine (may contain monoamine; hereinafter, referred to as "amine component") with dicarboxylic acid and/or tricarboxylic acid (may contain monocarboxylic acid; hereinafter, referred to as "carboxylic acid component") under known reaction conditions. For example, the amine component and the carboxylic acid component as raw materials are introduced into a reaction vessel such as a four-neck flask, and the raw materials are stirred in an inert gas atmosphere (for example, under a nitrogen gas flow) to prepare a mixture. Then, the mixture of the raw materials is heated and subjected to a polycondensation reaction at 150°C to 200°C for 2 to 10 hours to synthesize the polyamide.

In this process, a molar ratio between the amine component and the carboxylic acid component (mol% of the amine component/mol% of the carboxylic acid component) is preferably less than 1. That is, it is preferred that an excess amount of the carboxylic acid component to the amine component is subjected to a polycondensation reaction. In this case, at least one terminal of the polyamide (corresponding to X in formula (1)) is a carboxyl group. However, it is not necessarily required that at least one terminal of the polyamide is a carboxyl group, but all the terminals may be amino groups.

<Preparation of Polyether>

The polyether used in synthesis of the block copolymer (A1) according to the present invention can be synthesized by methods known to those skilled in the art. For example, it can be synthesized by the method described in JP 2002-212125 A. As an example, alkyl monool and potassium hydroxide as raw materials are provided in a stainless autoclave with stirring and temperature control functions, and after nitrogen replacement, the temperature is raised to 120°C with stirring. Then, while maintaining the temperature at 120±5°C and maintaining the pressure at approximately 3 atm, ethylene oxide is injected, and the reaction is performed for 20 minutes. The mixture is aged at the same temperature for 2 hours and 30 minutes, and then cooled to 40°C to thereby obtain alkyl polyether monool. As the polyether used in synthesis of the block copolymer (A1), commercially available products may also be used. Examples of such commercially available products include BLAUNON (registered trademark) SR-715, BLAUNON SR-720, BLAUNON BE-10, BLAUNON BE-20, BLAUNON BE-30, BLAUNON DSP-12.5, BLAUNON PH-5, BLAUNON SRP-0430B, FINESURF (registered trademark) 230, FINESURF 320, FINESURF 400, FINESURF FO-160, FINESURF 7045 (all manufactured by Aoki Oil Industrial Co., Ltd.), JEFFAMINE (registered trademark) M-1000, JEFFAMINE M-2070 (all manufactured by Huntsman Corporation), UNIOX (registered trademark )M-400, UNIOX M-550, UNIOX M-1000, UNIOX M-2000, UNIOX M-4000 (all manufactured by NOF Corporation), NEWCOL (registered trademark) 2310, NEWCOL 2320, NEWCOL NT-12, NEWCOL NT-15, NEWCOL NT-20, NEWCOL NT-30, NEWCOL 1004, NEWCOL 1006, NEWCOL 1008, NEWCOL 1820, NEWCOL 710, NEWCOL 719, NEWCOL 729 (all manufactured by Nippon Nyukazai Co., Ltd.), EMULGEN (registered trademark) 106, EMULGEN 220, EMULGEN 350, EMULGEN 408, EMULGEN 709, EMULGEN 2025G, EMULGEN A-90, EMULGEN A-500 (all manufactured by Kao Corporation), NOIGEN (registered trademark) TDS-100, NOIGEN TDX-120D, NOIGEN EA-137, NOIGEN SD-70 (all manufactured by DKS Co. Ltd), EMALEX (registered trademark) BHA-5, EMALEX BHA-20, EMALEX DAPE-0212, EMALEX 1615, EMALEX 1820, EMALEX OD-16 (all manufactured by Nihon Emulsion Co., Ltd.), and the like.

<Synthesis of Block Copolymer (A1)>

The polyamide and polyether thus obtained are subjected to a dehydration reaction to thereby obtain a block copolymer (A1). The reaction vessel that can be used may be, for example, the same as the reaction vessel used in synthesis of the above polyamide. The molar ratio between the polyamide and polyether is preferably 0.10 mol to 1.50 mol per 1.00 mol of polyamide, and more preferably 0.20 mol to 1.00 mol per 1.00 mol of polyamide. The dehydration reaction may be performed, for example, at 200°C to 250°C for 3 to 5 hours. In addition, when the block copolymer (A1) is prone to coloration, for example, a small amount of hypophosphorous acid or the like may be added in an amount of 0.1 to 1.0 parts by mass relative to 100 parts by mass of the total of polyamide and polyether to suppress coloration.

Further, instead of subjecting the polyamide and polyether to a dehydration reaction after synthesizing the polyamide in advance as described above, the block copolymer (A1) can also be obtained by mixing an amine component and a carboxylic acid component, which are used as raw materials of polyamide, with a polyether, and then subjecting the mixture to a dehydration reaction.

<Dispersion of Block Copolymer (A1)>

The block copolymer (A1) can be dispersed in water by a known method for dispersing polymers. For example, deionized water is introduced into a vessel such as a four-neck flask, which is then heated to 60°C to 75°C. Meanwhile, the block copolymer (A1) is mixed with a neutralizing base, a solvent, and the like, to prepare a liquid mixture. The liquid mixture is gradually added to the heated deionized water in the vessel with stirring. After the liquid mixture is added, stirring is further continued for approximately 5 minutes to 120 minutes at 50°C to 80°C to thereby obtain a dispersion. After the stirring is completed, the dispersion is transferred to another vessel, and allowed to stand at room temperature for approximately 12 hours to 72 hours to thereby obtain a water-based composition of the present invention.

(Applications of Water-Based Composition)

The suitable applications of the water-based composition according to the present invention are not particularly limited as long as it is used for the formulations containing water. For example, the water-based composition according to the present invention can be suitably used for aqueous metallic paints in which pearl pigments such as aluminum pigments and mica are used or aqueous anti-corrosive paints in which pigments having a large particle size and a high specific gravity, such as anti-corrosive pigments, are used. Further, the water-based composition according to the present invention can also be suitably used for aqueous clear paints, aqueous paints in which general color pigments or extender pigments other than those described above are used, or aqueous coating materials such as water-based ink.

[Diluted Composition]

A diluted composition according to the present invention is a composition obtained by diluting the above-mentioned water-based composition. In the diluted composition, the mass ratio of the block copolymer (A1) to water, A1/water, may be 0.01/99.99 to 5/95, preferably 0.05/99.95 to 5/95, more preferably 0.1/99.9 to 5/95, and still more preferably 0.2/99.8 to 5/95. If the A1/water is smaller than 0.01/99.99, the rheology modifying effect and dispersion effect are lost when the water-based composition is diluted. Examples of the medium for diluting the water-based composition include water, resin liquids (emulsion resin liquids, dispersion resin liquids, and the like), paints, inks and pigment slurries in which pigments or the like are dispersed in a predetermined medium.

The diluted composition can be obtained by diluting the above water-based composition directly with the above medium. Alternatively, the diluted composition may be obtained by preparing a masterbatch in which the water-based composition is diluted with a predetermined medium (such as water), and diluting the masterbatch with the above mediums.

[Aqueous Paint Composition]

An aqueous paint composition according to a preferred embodiment of the present invention contains the above water-based composition and a luster pigment. In addition to the water-based composition and the luster pigment, the aqueous paint composition of the present invention may further contain other additives such as water-based resins, pigments other than the luster pigment, defoamers, film-forming auxiliary agents and pH adjusters.

(Content of Water-Based Composition)

The content of the block copolymer (A1) in the water-based composition of the present invention varies depending on the type of water-based resin which is a binder in the aqueous paint composition, the formulation composition of the pigment, and the like, but is typically 0.01 mass% or greater and 5 mass% or less of the total solid content of the aqueous paint composition, preferably 0.05 mass% or greater and 2 mass% or less, more preferably 0.1 mass% or greater and 1 mass% or less, and still more preferably 0.2 mass% or greater and 0.5 mass% or less. The content of the water-based composition within the above range can further enhance the effect of adding the water-based composition (rheology modifying effect and dispersion effect to the aqueous paint composition).

(Water-Based Resin)

The water-based resin contained as a binder in the aqueous paint composition according to the present invention is a dispersion in which a resin component is dispersed in a medium mainly composed of water, and examples of the resin component include acrylic-based resins, acrylic silicone resins, alkyd-based resins, polyester-based resins, urethane-based resins, epoxy-based resins, silicone resins, fluororesins, and the like. The form of the water-based resin is classified into water soluble, (colloidal) dispersion and emulsion depending on the dispersion form, and any form is applicable. These resins may be, for example, thermosetting type, UV-curable type, EB-curable type, oxidative curable type, photocationic curable type or peroxide curable type, or may be resins that are cured by chemical reaction in the presence or absence of a catalyst or may be resins having high glass transition point and forming a film only by volatilizing a dilution medium without involving chemical reactions. Further, examples of curing agents include amino resins, melamine resins, isocyanate compounds, block isocyanate compounds, epoxy compounds, and the like.

(Luster Pigment)

The type of the luster pigment used in the present invention is not particularly limited as long as it imparts metallic luster or gloss to a coating film, and examples thereof include aluminum, alumina, nickel, zinc, iron, stainless steel, bismuth, other metal pigments, pearl pigments using mica and the like, aluminum flakes, copper flakes, micaceous iron oxide, mica, metallic pigments such as flaky powder of mica coated with a metal oxide, glass flakes, graphite, and the like.

(Other Pigments)

Examples of pigments other than the luster pigment include extender pigments and color pigments that are typically used in aqueous paints. Examples of the extender pigments include calcium carbonate (ground calcium carbonate (GCC), precipitated calcium carbonate (PCC), and the like), barium sulfate, silicon dioxide, aluminum hydroxide, talc, organic fibers, glass powder, and the like. Examples of the color pigments include titanium dioxide, carbon black, chrome yellow, cadmium yellow, ocher, titanium yellow, zinc chromate, red iron oxide, aluminosilicate, quinacridone pigments, phthalocyanine pigments, anthraquinone pigments, diketopyrrolopyrrole pigments, benzimidazolone pigments, isoindolinone pigments, and the like.

(Other Additives)

The aqueous paint composition of the present invention may contain other substances within a range that does not impair the characteristics thereof and purposes of the present invention. Examples of such substances include water scavengers (for example, silane coupling agents), adhesion promoters, surfactants, curing catalysts, film-forming auxiliary agents, dryers, antifouling agents, sensitizers, antioxidants, photostabilizers, UV absorbers, water resistant agents, antiseptic and antifungal agents, defoamers, leveling agents, dispersants, flame retardants, antistatic agents, release agents, deodorants, pH adjusting agents, fragrances, and the like.

(Method for Producing Aqueous Paint Composition)

The aqueous paint composition according to the present invention can be produced by using known methods for preparing aqueous paints. For example, components other than the water-based composition and the pigment described above are stirred and mixed in a medium mainly composed of water such as deionized water (ion-exchanged water), and then the pH is adjusted, if necessary, to prepare a clear paint. The water-based composition and the pigment are then added and dispersed in the clear paint to produce an aqueous paint composition.

The water-based composition according to the present invention can be added to the aqueous paint composition at the timing when the pigment is kneaded as described above or after the aqueous paint is produced. Further, it is also possible to prepare a masterbatch and add it to the aqueous paint. Further, the water-based composition and the pigment can be dispersed using a device which is typically used for production of aqueous paints. In addition, conditions for the stirring rate and stirring time in dispersion of the water-based composition and the pigment are not particularly limited, and may be set as appropriate according to the dispersion state of the water-based composition and the pigment.

(Applications of Aqueous Paint Composition)

The aqueous paint composition according to the present invention can be suitably used for aqueous metallic paints or aqueous anti-corrosive paints that use pigments having a large particle size and a high specific gravity, such as aluminum pigments, pearl pigments ushing mica and the like, or anti-corrosive pigments. Further, the aqueous paint composition according to the present invention can also be suitably used for aqueous paints that use general color pigments or extender pigments other than those described above, or aqueous coating materials such as water-based ink.

Some preferred embodiments of the present invention have been described above, but the present invention is not limited to the aforementioned embodiments. That is, other embodiments or various modifications that would occur to those skilled in the art within the scope of the appended claims should be construed as being within the technical scope of the present invention.

[Examples]

The present invention will be specifically described below by using examples. The present invention is not limited to these examples in any manner. In the examples, "%" and "parts" indicate "mass%" and "parts by mass," respectively, unless otherwise specified.

[Preparation of Water-Based Composition]

Water-based compositions of the examples and comparative examples were prepared as follows.

(Synthesis of Polyamide)

First, a polyamide used in synthesis of a polyamide-polyether block polymer (including examples corresponding to the block copolymer (A1) of the present invention) was synthesized.

<Synthesis Example 1 for Synthesizing Polyamide>

354 parts (0.60 mol) of dimer acid (trade name "HARIDIMER 250": manufactured by Harima Chemicals Group, Inc.) and 53.1 parts (15 mass% of total carboxylic acid) of xylene were weighed into a 1-L four-necked flask equipped with a stirrer, a temperature controller, a water separator and a nitrogen introducing tube, and heated to 50°C. Next, 46.5 parts (0.40 mol) of hexamethylenediamine was gradually added to the four-necked flask, and stirred at 150°C for 60 minutes. The mixture was gently heated to 175°C and subjected to a dehydration reaction for 150 minutes to thereby obtain polyamide P-1.

<Synthesis Examples 2 to 4 for Synthesizing Polyamide>

Polyamides P-2 to P-4 were obtained by the same synthesis method as in Synthesis example 1 for synthesizing polyamide, except that the molar ratios of dicarboxylic acid and diamine were changed to those shown in Table 1.

[Table 1]

| Table 1 Synthesis examples 1 to 4 | | Polyamide | | | |
|---|---|---|---|---|---|
| | | P-1 | P-2 | P-3 | P-4 |
| dicarboxylic acid [molar ratio] | HARIDIMER 250 | 0.60 | 0.83 | 0.71 | |
| | Tsunodime 395 | | | | 1.00 |
| | Azelaic acid | | | 0.22 | |
| diamine [molar ratio] | Ethylenediamine | | 0.42 | | 0.33 |
| | Hexamethylenediamine | 0.40 | | 0.59 | |
| Acid value [mg KOH/g] | | 63 | 99 | 78 | 128 |

(Synthesis of Polyamide-Polyether Block Polymer)

Next, polyamide-polyether block polymers of Synthesis examples 5 to 16 were synthesized using polyamide P-1 or P-4 obtained as described above and polyether shown in Table 2 (see Table 2). Further, polyamide-polyether block polymers of Synthesis examples 17 to 37 were synthesized using diamine and dicarboxylic acid used as raw materials of polyamide, instead of preparing polyamide in advance, and polyether (see Table 3).

<Synthesis Example 5 for Synthesizing Polyamide-Polyether Block Polymer>

61.1 parts of polyamide P-1 of Synthesis example 1 and 38.9 parts of stearoxy PEG (trade name "BLAUNON (registered trademark) SR-720", manufactured by Aoki Oil Industrial Co., Ltd.) (1.00 mol per 1.00 mol of polyamide, 50 mol% per acid equivalent) were mixed using the same device as with Synthesis example 1 for synthesizing polyamide. A dehydration reaction was performed at 240°C for 5 hours to thereby obtain polyamide-polyether block polymer P-5.

<Synthesis Examples 6 to 16 for Synthesizing Polyamide-Polyether Block Polymer>

Polyamide-polyether block polymers P-6 to P-16 were obtained by synthesizing a polyamide-polyether block polymer by the same synthesis method as in Synthesis example 5 for synthesizing polyamide, except that the molar ratios of polyamide P-1 or P-4 and the polyether raw material were changed to those in Table 2 (polyether raw material was an equivalent to polyamide). Further, the reaction temperature and reaction time of the dehydration reaction were appropriately adjusted within the ranges of 200°C to 250°C and 3 to 5 hours, respectively, and when coloration is likely to occur, hypophosphorous acid was added in the range of approximately 0.1 parts to 1.0 part to suppress coloration.

[Table 2]

| Table 2 Synthesis examples 5 to 16 | | | Polyamide-polyether block polymer | | | | | | | | | | | | |
|---|---|---|---|---|---|---|---|---|---|---|---|---|---|---|---|
| | | | P-5 | P-6 | P-7 | P-8 | P-9 | P-10 | P-11 | P-12 | P-13 | P-14 | P-15 | P-16 |
| Polyamide [molar ration] | | P-1 | 1.00 | 1.00 | 1.00 | 1.00 | 1.00 | 1.00 | 1.00 | 1.00 | | | | 1.00 |
| | | P-4 | | | | | | | | | 1.00 | 1.00 | 1.00 | |
| Polyether raw material [molar ratio] | | UNIOX M-1000 | | | | | | | | | 3.00 | | | |
| | | BLAUNON SR-720 | 1.00 | | | 0.60 | | 0.20 | | | | | | |
| | | BLAUNON SR-730 | | | | | | | | | | | 3.00 | |
| | | BLAUNON BE-20 | | 1.00 | | | | | | | | | | |
| | | BLAUNON BE-30 | | | 1.00 | | 0.60 | | | | | | | |
| | | JEFFAMINE M-1000 | | | | | | | 0.60 | | | | | |
| | | JEFFAMINE M-2070 | | | | | | | | 0.20 | | 2.00 | | |
| | | EMULGEN A-90 | | | | | | | | | | | | 0.72 |
| Number of carbon atoms in $R_1$ | | | 34,51 | 34,51 | 34,51 | 34,51 | 34,51 | 34,51 | 34,51 | 34,51 | 34 | 34 | 34 | 34,51 |
| Number of carbon atoms in $R_2$ | | | 6 | 6 | 6 | 6 | 6 | 6 | 6 | 6 | 2 | 2 | 2 | 6 |
| Number of carbon atoms in $R_3$ | | | 18 | 22 | 22 | 18 | 22 | 18 | 1 | 1 | 1 | 1 | 18 | 22 |
| Number of carbon atoms in $R_4$ | | | 2 | 2 | 2 | 2 | 2 | 2 | 2,3 | 2,3 | 2 | 2,3 | 2 | 2 |
| n (average) | | | 20 | 20 | 30 | 20 | 30 | 20 | 22 | 41 | 23 | 41 | 30 | 18 |
| Z | | | ester | ester | ester | ester | ester | ester | amide | amide | ester | amide | ester | ester |
| Mass% of polyamide moiety | | | 62.9 | 61.4 | 53.8 | 72.4 | 64.7 | 88.7 | 76.3 | 82.8 | 22.6 | 17.9 | 15.5 | 69.9 |
| Reaction yield [%] | | | 95 | 97 | 97 | 100 | 100 | 100 | 100 | 100 | 83 | 96 | 87 | 99 |
| Reaction product acid value [mg KOH/g] | | | 21 | 20 | 17 | 30 | 28 | 48 | 34 | 46 | 5 | 1 | 3 | 28 |
| A1 acid value [mg KOH/g] | | | 21 | 20 | 18 | 30 | 28 | 48 | 34 | 46 | 7 | 1 | 4 | 28 |
| Mass% of $(R_4O)_n$ moiety in which $R_4$ has 2 carbon atoms | | | 28.5 | 28.3 | 37.2 | 21.2 | 28.4 | 8.6 | 19.9 | 11.7 | 59.0 | 54.3 | 57.2 | 21.8 |
| Mass% of $(R_4O)_n$ moiety in which $R_4$ has 2 carbon atoms, including unreacted portion | | | 29.9 | 29.4 | 38.4 | 21.2 | 28.4 | 8.6 | 19.9 | 11.7 | 78.5 | 56.6 | 70.7 | 22.0 |

**EP 4 556 508 A1**

<Synthesis Example 17 for Synthesizing Polyamide-Polyether Block Polymer>

As with Synthesis example 1 for synthesizing polyamide, 61.8 parts of high-purity dimer acid (trade name "Tsunodime (registered trademark) 395", manufactured by Tsuno Food Industrial Co., Ltd.), 4.3 parts of ethylenediamine (0.67 mol per 1.00 mol of high-purity dimer acid, 67 mol% amine per acid equivalent), 33.9 parts of methoxy PEG (trade name "UNIOX (registered trademark) M-550", manufactured by NOF Corporation) (0.57 mol per 1.00 mol of high-purity dimer acid, 29 mol% per acid equivalent), and approximately 0.1 parts of hypophosphorous acid for prevention of coloration were mixed. A dehydration reaction was performed at 230°C for 5 hours to thereby obtain polyamide-polyether block polymer P-17.

<Synthesis Examples 18 to 37 for Synthesizing Polyamide-Polyether Block Polymer>

Polyamide-polyether block polymers P-18 to P-37 were obtained by synthesizing a polyamide-polyether block polymer by the same synthesis method as in Synthesis example 17 for synthesizing polyamide-polyether block polymer, except that the molar ratios of dicarboxylic acid, diamine and polyether raw material were changed to those in Table 3 (molar ratios are those of raw materials, not functional group equivalents). Further, the reaction temperature and reaction time of the dehydration reaction were appropriately adjusted within the ranges of 200°C to 250°C and 3 to 5 hours, respectively, and when coloration is likely to occur, hypophosphorous acid was added in the range of approximately 0.1 parts to 1.0 part to suppress coloration.

[Table 3]

Table 3 (Part 1) Synthesis examples 17 to 28

| | | Polyamide-polyether block polymer | | | | | | | | | | | |
|---|---|---|---|---|---|---|---|---|---|---|---|---|---|
| | | P-17 | P-18 | P-19 | P-20 | P-21 | P-22 | P-23 | P-24 | P-25 | P-26 | P-27 | P-28 |
| dicarboxylic acid [molar ratio] | HARIDIMER 250 | | 1.00 | 1.00 | | 1.00 | 1.00 | 1.00 | 1.00 | 1.00 | 1.00 | 1.00 | 1.00 |
| | Tsunodime 395 | 1.00 | | | | | | | | | | | |
| | Adipic acid | | | | 1.00 | | | | | | | | |
| | Azelaic acid | | 0.25 | | | | | | | | 0.10 | | |
| | Sebacic acid | | | 0.11 | | | | | | 0.04 | | | |
| diamine [molar ratio] [mol比] | Ethylenediamine | 0.67 | | | | 0.69 | | | | | | 0.33 | |
| | Hexamethylenediamine | | 0.81 | 0.66 | | | 0.73 | 0.75 | 0.50 | 0.64 | 0.64 | | |
| | Dimer diamine | | | | 0.66 | | | | | | | | |
| | Meta-xylenediamine | | | | | | | | | | | | 0.33 |
| | Isophoronediamine | | | | | | | | | | | | |
| | Trimethylhexamethylenediamine | | | | | | | | | | | | |
| Polyether raw material [molar ratio] | UNIOX M-400 | | 0.35 | | | | 0.36 | 0.34 | | | | | |
| | UNIOX M-550 | 0.57 | | | | | | | | | | | |
| | UNIOX M-1000 | | | | | | | | | | | 2.00 | 2.00 |
| | JEFFAMINE M-1000 | | | | | | | | | | | | |
| | FINESURF 400 | | | 0.23 | | | | | | | | | |
| | BLAUNON SR-715 | | | | | | | | | 0.20 | | | |
| | BLAUNON SR-720 | | | | | 0.31 | | | | | | | |
| | BLAUNON BE-20 | | | | 0.24 | | | | 0.30 | | | | |
| | BLAUNON BE-30 | | | | | | | | | | 0.18 | | |
| Number of carbon atoms in $R_1$ | | 34 | 7,34,51 | 8,34,51 | 4 | 34,51 | 34,51 | 34,51 | 34,51 | 8,34,51 | 7,34,51 | 34,51 | 34,51 |
| Number of carbon atoms in $R_2$ | | 2 | 6 | 6 | 36 | 2 | 6 | 6 | 6 | 6 | 6 | 2 | 8 |
| Number of carbon atoms in $R_3$ | | 1 | 1 | 12,14 | 22 | 18 | 1 | 1 | 22 | 18 | 22 | 1 | 1 |

Table 3 (Part 1) Synthesis examples 17 to 28

| | Polyamide-polyether block polymer | | | | | | | | | | | |
| --- | --- | --- | --- | --- | --- | --- | --- | --- | --- | --- | --- | --- |
| | P-17 | P-18 | P-19 | P-20 | P-21 | P-22 | P-23 | P-24 | P-25 | P-26 | P-27 | P-28 |
| Number of carbon atoms in $R_4$ | 2 | 2 | 2 | 2 | 2 | 2 | 2 | 2 | 2 | 2 | 2 | 2 |
| n (average) | 12 | 8 | 20 | 20 | 20 | 8 | 8 | 20 | 15 | 30 | 23 | 23 |
| Z | ester | ester | ester | ester | ester | ester | ester | ester | ester | ester | ester | ester |
| Mass% of polyamide moiety | 72.4 | 83.8 | 73.4 | 63.2 | 63.9 | 88.4 | 87.8 | 62.2 | 77.7 | 68.9 | 23.4 | 23.9 |
| Reaction yield [%] | 79 | 97 | 99 | 99 | 97 | 65 | 71 | 100 | 100 | 100 | 81 | 91 |
| Reaction product acid value [mg KOH/g] | 14 | 39 | 44 | 34 | 22 | 21 | 18 | 40 | 40 | 44 | 6 | 4 |
| A1 acid value [mg KOH/g] | 15 | 39 | 44 | 34 | 22 | 23 | 19 | 40 | 40 | 44 | 9 | 5 |
| Mass% of $(R_4O)_n$ moiety in which $R_4$ has 2 carbon atoms | 26.4 | 14.4 | 21.7 | 27.0 | 27.8 | 10.3 | 10.8 | 27.7 | 15.9 | 25.0 | 56.4 | 63.1 |
| Mass% of $(R_4O)_n$ moiety in which $R_4$ has 2 carbon atoms, including unreacted portion | 33.6 | 14.8 | 22.0 | 27.3 | 28.6 | 16.0 | 15.2 | 27.7 | 15.9 | 25.1 | 77.7 | 77.9 |

EP 4 556 508 A1

[Table 3]

Table 3 (Part 2) Synthesis examples 29 to 37

| | | Polyamide-polyether block polymer | | | | | | | | |
|---|---|---|---|---|---|---|---|---|---|---|
| | | P-29 | P-30 | P-31 | P-32 | P-33 | P-34 | P-35 | P-36 | P-37 |
| dicarboxylic acid [molar ratio] | HARIDIMER 250 | | | | | 1.00 | 1.00 | 1.00 | 1.00 | 1.00 |
| | Tsunodime 395 | 1.00 | 1.00 | 1.00 | 1.00 | | | | | |
| | Adipic acid | | | | | | | | | |
| | Azelaic acid | | | | | | 0.41 | 0.21 | | |
| | Sebacic acid | | | | | | | | | |
| diamine [molar ratio] [mol%] | Ethylenediamine | | | | | 0.33 | | 0.65 | | |
| | Hexamethylenediamine | | | | | | 0.82 | | 0.57 | |
| | Dimer diamine | | | 0.33 | | | | | | |
| | Meta-xylenediamine | 0.33 | | | | | | | | |
| | Isophoronediamine | | 0.33 | | | | | | | |
| | Trimethylhexamethylenediamine | | | | 0.33 | | | | | |
| Polyether raw material [molar ratio] | UNIOX M-400 | | | | | | | 0.17 | 0.20 | |
| | UNIOX M-550 | | | | | | | | | |
| | UNIOX M-1000 | 2.00 | 2.00 | 2.00 | 2.00 | | | | | |
| | JEFFAMINE M-1000 | | | | | 1.33 | | | | |
| | FINESURF 400 | | | | | | 0.71 | | | |
| | BLAUNON SR-715 | | | | | | | | | |
| | BLAUNON SR-720 | | | | | | | | | 1.00 |
| | BLAUNON BE-20 | | | | | | | | | |
| | BLAUNON BE-30 | | | | | | | | | |
| | Number of carbon atoms in $R_1$ | 34 | 34 | 34 | 34 | 34,51 | 7,34,51 | 7,34,51 | 34,51 | 34,51 |
| | Number of carbon atoms in $R_2$ | 8 | 10 | 36 | 9 | 2 | 6 | 2 | 6 | - |
| | Number of carbon atoms in $R_3$ | 1 | 1 | 1 | 1 | 1 | 12,14 | 1 | 1 | 18 |
| | Number of carbon atoms in $R_4$ | 2 | 2 | 2 | 2 | 2,3 | 2 | 2 | 2 | 2 |

(continued)

| Table 3 (Part 2) Synthesis examples 29 to 37 | | | | | | | | | |
|---|---|---|---|---|---|---|---|---|---|
| | Polyamide-polyether block polymer | | | | | | | | |
| | P-29 | P-30 | P-31 | P-32 | P-33 | P-34 | P-35 | P-36 | P-37 |
| n (average) | 23 | 23 | 23 | 23 | 22 | 20 | 8 | 8 | 20 |
| Z | ester | ester | ester | ester | amide | ester | ester | ester | ester |
| Mass% of polyamide moiety | 23.1 | 23.5 | 27.0 | 23.4 | 31.6 | 50.9 | 88.5 | 88.1 | 32.6 |
| Reaction yield [%] | 95 | 92 | 95 | 97 | 96 | 96 | 100 | 100 | 100 |
| Reaction product acid value [mg KOH/g] | 3 | 5 | 2 | 2 | 2 | 19 | 77 | 55 | 32 |
| A1 acid value [mg KOH/g] | 4 | 6 | 3 | 2 | 2 | 19 | 77 | 55 | 32 |
| Mass% of $(R_4O)_n$ moiety in which $R_4$ has 2 carbon atoms | 67.1 | 64.9 | 63.0 | 68.6 | 56.0 | 40.3 | 8.8 | 10.4 | 51.1 |
| Mass% of $(R_4O)_n$ moiety in which $R_4$ has 2 carbon atoms, including unreacted portion | 78.3 | 77.9 | 74.3 | 78.0 | 58.4 | 41.9 | 8.8 | 10.4 | 51.1 |

For the synthesis examples using Tsunodime 395 as the dicarboxylic acid in Synthesis examples 1 to 37, a, b, c and p in formula (1) are a=1, b=1, c=1 and p=1. For the synthesis examples using HARIDIMER 250 as the dicarboxylic acid in Synthesis examples 1 to 37, a, b, c and p in formula (1) are a=1 to 11 (a=1 to 3 is the main component), b=1 to 2 (b=1 is the main component), c=1 to 2 (c=1 is the main component), and p=1 to 11 (p=approx. 1 to 3 is the main component). Since m has a distribution, it cannot be specified, but the number-average value can be determined from the acid/amine ratio. The number-average value of m is the number of moles of amine when proportionally calculated so that the number of moles of acid = the number of moles of amine + 1.

(Preparation Examples of Water-Based Composition)

Water-based compositions of the examples and comparative examples were prepared as follows.

<Example 1>

79.2 parts of deionized water was weighed into a 500-mL four-necked flask equipped with a stirrer, a cooling tube and a thermometer, and heated to maintain the temperature at 60°C to 75°C. Meanwhile, 15.0 parts of polyamide-polyether block polymer P-5, 5.3 parts of 2-butoxyethanol as the solvent, and 0.5 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-1.

<Examples 2 to 18 and 33 to 35>

Water-based compositions E-2 to E-18 and E-33 to E-35 of Examples 2 to 18 and 33 to 35 were obtained in the same manner as in Example 1 using the polyamide-polyether block polymers shown in Table 5 in the blending ratios shown in Table 4.

[Table 4]

| Table 4 Examples 1 to 18, 33 to 35 | |
| --- | --- |
| Polyamide-polyether block polymer | 15 |
| 2-butoxyethanol | 5.3 |
| 2-(dimethylamino)ethanol | x |
| Deionized water | 79.7-x |
| Total | 100 |
| * x is the neutralization equivalent by mass calculated from the acid value. | |

<Example 19>

89.7 parts of deionized water was weighed using the same device as in Example 1, and heated to maintain the temperature at 60°C to 75°C. Meanwhile, 10.0 parts of polyamide-polyether block polymer P-6, and 0.3 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-19.

<Example 20>

74.5 parts of deionized water was weighed using the same device as in Example 1, and heated to maintain the temperature at 60°C to 75°C. Meanwhile, 15.0 parts of polyamide-polyether block polymer P-5, 10.0 parts of ethylene oxide 4-mol adduct of 2-ethylhexanol as the surfactant, and 0.5 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-20.

<Example 21>

44.8 parts of deionized water was weighed using the same device as in Example 1, and heated to maintain the temperature at 60°C to 75°C. Meanwhile, 18.0 parts of polyamide-polyether block polymer P-19, 36.0 parts of 2-butoxyethanol, and 1.2 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-21.

<Example 22>

74.5 parts of deionized water was weighed using the same device as in Example 1, and heated to maintain the temperature at 60°C to 75°C. Meanwhile, 15.0 parts of polyamide-polyether block polymer P-6, 10.0 parts of methoxy PEG (trade name "UNIOX M-400", manufactured by NOF Corporation) as the surfactant, and 0.5 parts of 2-(dimethylamino) ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-22.

<Example 23>

30.0 parts of polyamide-polyether block polymer P-13, and 70.0 parts of deionized water were weighed using the same device as in Example 1. The mixture was heated to maintain the temperature at 60°C to 75°C, and stirring was continued for 30 minutes to thereby obtain a dispersion. After the stirring was completed, the dispersion was transferred to another vessel, and allowed to stand at room temperature for 24 hours to thereby obtain water-based composition E-23.

<Examples 24 and 26 to 32>

Water-based compositions E-24 and E-26 to 32 were obtained in the same manner as in Example 23, except that the polyamide-polyether block polymer was changed to P-14 and P-27 to P-33, respectively.

<Example 25>

10.0 parts of polyamide-polyether block polymer P-15, and 90.0 parts of deionized water were weighed using the same device as in Example 1. The mixture was heated to maintain the temperature at 60°C to 75°C, and stirring was continued for 30 minutes to thereby obtain a dispersion. After the stirring was completed, the dispersion was transferred to another vessel, and allowed to stand at room temperature for 24 hours to thereby obtain water-based composition E-25.

<Example 36>

79.9 parts of deionized water was weighed using the same device as in Example 1, and heated to 50°C. Meanwhile, 8.0 parts of polyamide-polyether block polymer P-36, 2.0 parts of B-4 described in Table 2 in JP 2012-111832 A, 5.0 parts of propylene glycol monomethyl ether, 4.0 parts of ethylene oxide 4-mol adduct of 2-ethylhexanol as the surfactant, and 1.1 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 40°C to 55°C to thereby obtain a dispersion. After the stirring was completed, the dispersion was transferred to another vessel, and heated in a thermostatic chamber at 80°C for 20 hours to thereby obtain water-based composition E-36.

<Example 37>

75.0 parts of deionized water was weighed using the same device as in Example 1, and heated to 50°C. Meanwhile, 8.0 parts of polyamide-polyether block polymer P-36, 4.0 parts of hydrogenated castor oil, 7.0 parts of propylene glycol monomethyl ether, 5.0 parts of ethylene oxide 4-mol adduct of 2-ethylhexanol as the surfactant, and 1.1 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 40°C to 55°C to thereby obtain a dispersion. After the stirring was completed, the dispersion was transferred to another vessel, and allowed to stand at room temperature for 24 hours to thereby obtain water-based composition E-37.

<Example 38>

78.5 parts of deionized water was weighed using the same device as in Example 1, and heated to maintain the temperature at 60°C to 75°C. Meanwhile, 15.0 parts of polyamide-polyether block polymer P-5, 4.0 parts of propylene glycol monomethyl ether, 2.0 parts of diethylene glycol dibutyl ether, and 0.5 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-38.

<Example 39>

76.5 parts of deionized water was weighed using the same device as in Example 1, and heated to maintain the temperature at 60°C to 75°C. Meanwhile, 15.0 parts of polyamide-polyether block polymer P-5, 3.0 parts of 2-butoxyethanol, 5.0 parts of tetraethylene glycol dimethyl ether, and 0.5 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-39.

<Example 40>

46.7 parts of deionized water was weighed using the same device as in Example 1, and heated to maintain the temperature at 60°C to 75°C. Meanwhile, 22.0 parts of polyamide-polyether block polymer P-5, 3.5 parts of oleic acid, 7.0 parts of 2-butoxyethanol, and 20.8 parts of JEFFAMINE (registered trademark) M-1000 as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-40.

<Example 41>

77.8 parts of deionized water was weighed using the same device as in Example 1, and heated to maintain the temperature at 60°C to 75°C. Meanwhile, 12.0 parts of polyamide-polyether block polymer P-5, 4.0 parts of polyamide-polyether block polymer P-37, 5.6 parts of 2-butoxyethanol, and 0.6 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-41.

<Example 42>

79.1 parts of deionized water was weighed using the same device as in Example 1, and heated to maintain the temperature at 60°C to 75°C. Meanwhile, 10.0 parts of polyamide-polyether block polymer P-5, 5.0 parts of polyamide-polyether block polymer P-37, 5.3 parts of 2-butoxyethanol, and 0.6 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-42.

<Example 43>

32.3 parts of deionized water was weighed using the same device as in Example 1, and heated to maintain the temperature at 60°C to 75°C. Meanwhile, 18.0 parts of polyamide-polyether block polymer P-34, 35.0 parts of 2-butoxyethanol, 14.0 parts of propylene glycol monomethyl ether, and 0.8 parts of 2-(dimethylamino)ethanol as the neutralizing base were mixed at 120°C to obtain a liquid mixture. The liquid mixture was gradually added to the heated water in the flask with stirring. After the liquid mixture was added, stirring was further continued for 30 minutes while maintaining the temperature in the range of 50°C to 80°C to thereby obtain a dispersion. After the stirring was completed, the dispersion was transferred to another vessel, and allowed to stand at room temperature for 24 hours to thereby obtain water-based composition E-43.

<Comparative Examples 1 to 3>

Water-based compositions C-1 to C-3 of Comparative examples 1 to 3 were obtained in the same manner as in Example 1, except that the polyamide-polyether block polymer was changed to polyamides P-1 to P-3, respectively, in the blending ratios shown in Table 4.

<Comparative Example 4>

30.0 parts of polyamide P-4, 6.1 parts of 2-(dimethylamino)ethanol as the neutralizing base, and 63.9 parts of deionized water were weighed using the same device as in Example 1. The mixture was heated to maintain the temperature at 60°C to 75°C and stirred for 30 minutes, but did not become homogeneous. Since a homogeneous water-based composition could not be obtained, further testing was discontinued.

The water-based compositions obtained as above were summarized in Table 5 below.

[Table 5]

| Table 5 Summary of water-based composition | | | | |
|---|---|---|---|---|
| | A1 used | A1 /water | Mass% of $(R_4O)_n$ moiety in which $R_4$ has 2 carbon atoms in A1+B1 | Mass% of $(R_4O)_n$ moiety in which $R_4$ has 2 carbon atoms in solid content |
| E-1 | P-5 | 16/84 | 29.9 | 29.9 |
| E-2 | P-6 | 16/84 | 29.4 | 29.4 |
| E-3 | P-7 | 16/84 | 38.4 | 38.4 |
| E-4 | P-8 | 16/84 | 21.2 | 21.2 |
| E-5 | P-9 | 16/84 | 28.4 | 28.4 |
| E-6 | P-10 | 16/84 | 8.6 | 8.6 |
| E-7 | P-11 | 16/84 | 19.9 | 19.9 |
| E-8 | P-12 | 16/84 | 11.7 | 11.7 |
| E-9 | P-17 | 15/85 | 33.6 | 33.6 |
| E-10 | P-18 | 16/84 | 14.8 | 14.8 |
| E-11 | P-19 | 16/84 | 22.0 | 22.0 |
| E-12 | P-20 | 16/84 | 27.3 | 27.3 |
| E-13 | P-21 | 16/84 | 28.6 | 28.6 |
| E-14 | P-22 | 15/85 | 16.0 | 16.0 |
| E-15 | P-23 | 15/85 | 15.2 | 15.2 |

(continued)

| | A1 used | A1 /water | Mass% of $(R_4O)_n$ moiety in which $R_4$ has 2 carbon atoms in A1+B1 | Mass% of $(R_4O)_n$ moiety in which $R_4$ has 2 carbon atoms in solid content |
|---|---|---|---|---|
| E-16 | P-24 | 16/84 | 27.7 | 27.7 |
| E-17 | P-25 | 16/84 | 15.9 | 15.9 |
| E-18 | P-26 | 16/84 | 25.1 | 25.1 |
| E-19 | P-6 | 10/90 | 29.4 | 29.4 |
| E-20 | P-5 | 16/84 | 40.9 | 40.9 |
| E-21 | P-19 | 29/71 | 22.0 | 22.0 |
| E-22 | P-6 | 17/83 | 54.5 | 54.5 |
| E-23 | P-13 | 22/78 | 78.5 | 78.5 |
| E-24 | P-14 | 29/71 | 56.6 | 56.6 |
| E-25 | P-15 | 7/93 | 70.7 | 70.7 |
| E-26 | P-27 | 21/79 | 77.7 | 77.7 |
| E-27 | P-28 | 23/77 | 77.9 | 77.9 |
| E-28 | P-29 | 23/77 | 78.3 | 78.3 |
| E-29 | P-30 | 23/77 | 77.9 | 77.9 |
| E-30 | P-31 | 24/76 | 74.3 | 74.3 |
| E-31 | P-32 | 24/76 | 78.0 | 78.0 |
| E-32 | P-33 | 29/71 | 58.4 | 58.4 |
| E-33 | P-16 | 16/84 | 22.0 | 22.0 |
| E-34 | P-34 | 16/84 | 41.9 | 41.9 |
| E-35 | P-35 | 16/84 | 8.8 | 8.8 |
| E-36 | P-36 | 9/91 | 25.1 | 21.5 |
| E-37 | P-36 | 10/90 | 27.3 | 20.9 |
| E-38 | P-5 | 16/84 | 31.1 | 31.1 |
| E-39 | P-5 | 16/84 | 42.2 | 42.2 |
| E-40 | P-5 | 32/68 | 29.9 | 14.2 |
| E-41 | P-5, P-37 | 17/83 | 35.2 | 35.2 |
| E-42 | P-5, P-37 | 16/84 | 36.9 | 36.9 |
| E-43 | P-34 | 36/64 | 41.9 | 41.9 |
| C-1 | P-1 | 16/84 | - | - |
| C-2 | P-2 | 16/84 | - | - |
| C-3 | P-3 | 16/84 | - | - |

Table 5 Summary of water-based composition

<Comparative Example 5 (DMDG Gel Composition Corresponding to E-1)>

15.0 parts of polyamide-polyether block polymer P-5, and 85.0 parts of diethylene glycol dimethyl ether (DMDG) were weighed into a 500-mL four-necked flask equipped with a stirrer, a cooling tube and a thermometer, and dissolved by stirring for 30 minutes while maintaining the temperature in the range of 80°C to 120°C. After the stirring was completed, the solution was transferred to another vessel, and allowed to stand at room temperature for 24 hours to thereby obtain a DMDG gel composition corresponding to water-based composition E-1.

<Comparative Examples 6 to 33 (DMDG Gel Composition Corresponding to E-2 to E-22 and E-33 to E-35, E-38 to E-40 and E-43)>

DMDG gel compositions of Comparative examples 6 to 33 were obtained in the same manner as in Comparative example 5, except that the polyamide-polyether block polymer was changed to P-5 to P-12, P-16 to P-26, P-34 and P-35.

<Comparative Example 34 (DMDG Gel Composition Corresponding to E-36)>

12.0 parts of polyamide-polyether block polymer P-36, 3.0 parts of B-4 described in Table 2 in JP 2012-111832 A, and 85.0 parts of DMDG were weighed using the same device as in Comparative example 5, and dissolved by stirring for 30 minutes while maintaining the temperature in the range of 80°C to 120°C. After the stirring was completed, the solution was transferred to another vessel, and allowed to stand at room temperature for 24 hours to thereby obtain a DMDG gel composition corresponding to water-based composition E-36.

<Comparative Example 35 (DMDG Gel Composition Corresponding to E-37)>

10.0 parts of polyamide-polyether block polymer P-36, 5.0 parts of hydrogenated castor oil, and 85.0 parts of DMDG were weighed using the same device as in Comparative example 5, and dissolved by stirring for 30 minutes while maintaining the temperature in the range of 80°C to 120°C. After the stirring was completed, the solution was transferred to another vessel, and allowed to stand at room temperature for 24 hours to thereby obtain a DMDG gel composition corresponding to water-based composition E-37.

<Comparative Example 36 (DMDG Gel Composition Corresponding to E-41)>

11.3 parts of polyamide-polyether block polymer P-5, 3.8 parts of polyamide-polyether block polymer P-37, and 85.0 parts of DMDG were weighed using the same device as in Comparative example 5, and dissolved by stirring for 30 minutes while maintaining the temperature in the range of 80°C to 120°C. After the stirring was completed, the solution was transferred to another vessel, and allowed to stand at room temperature for 24 hours to thereby obtain a DMDG gel composition corresponding to water-based composition E-41.

<Comparative Example 37 (DMDG Gel Composition Corresponding to E-42)>

10.0 parts of polyamide-polyether block polymer P-5, 5.0 parts of polyamide-polyether block polymer P-37, and 85.0 parts of DMDG were weighed using the same device as in Comparative example 5, and dissolved by stirring for 30 minutes while maintaining the temperature in the range of 80°C to 120°C. After the stirring was completed, the solution was transferred to another vessel, and allowed to stand at room temperature for 24 hours to thereby obtain a DMDG gel composition corresponding to water-based composition E-42.

<Comparative Example 38 (HG Gel Composition Corresponding to E-1)>

15.0 parts of polyamide-polyether block polymer P-5, and 85.0 parts of 2-methylpentane-2,4-diol (also known as hexylene glycol: HG) were weighed into a 500-mL four-necked flask equipped with a stirrer, a cooling tube and a thermometer, and dissolved by stirring for 30 minutes while maintaining the temperature in the range of 80°C to 120°C. After the stirring was completed, the solution was transferred to another vessel, and allowed to stand at room temperature for 24 hours in an attempt to prepare a HG gel composition corresponding to water-based composition E-1, but no gelation occurred. Since no gelation occurred, and thus no rheology control function (rheology modifying effect) was expected to occur, further testing was discontinued.

<Comparative Examples 39 to 66 (HG Gel Composition Corresponding to E-2 to E-22 and E-33 to E-35, E-38 to E-40 and E-43)>

Preparation of HG gel compositions was attempted using the same method as in Comparative example 38, except that the polyamide-polyether block polymer was changed to P-5 to P-12, P-16 to P-26, P-34 and P-35. Although the HG gel composition corresponding to E-9 gelled, the others did not gel. Since the compositions that did not gel were not expected to perform rheology control function, further testing was discontinued.

<Comparative Example 67 (HG Gel Composition Corresponding to E-36)>

12.0 parts of polyamide-polyether block polymer P-36, 3.0 parts of B-4 described in Table 2 in JP 2012-111832 A, and 85.0 parts of HG were weighed using the same device as in Comparative example 38, and dissolved by stirring for 30 minutes while maintaining the temperature in the range of 80°C to 120°C. After the stirring was completed, the solution was transferred to another vessel, and allowed to stand at room temperature for 24 hours to thereby obtain a HG gel composition corresponding to water-based composition E-36.

<Comparative Example 68 (HG Gel Composition Corresponding to E-37)>

10.0 parts of polyamide-polyether block polymer P-36, 5.0 parts of hydrogenated castor oil, and 85.0 parts of HG were weighed using the same device as in Comparative example 38, and dissolved by stirring for 30 minutes while maintaining the temperature in the range of 80°C to 120°C. After the stirring was completed, the solution was transferred to another vessel, and allowed to stand at room temperature for 24 hours to thereby obtain a HG gel composition corresponding to water-based composition E-37.

<Comparative Example 69 (HG Gel Composition Corresponding to E-41)>

11.3 parts of polyamide-polyether block polymer P-5, 3.8 parts of polyamide-polyether block polymer P-37, and 85.0 parts of HG were weighed using the same device as in Comparative example 38, and dissolved by stirring for 30 minutes while maintaining the temperature in the range of 80°C to 120°C. After the stirring was completed, the solution was transferred to another vessel, and allowed to stand at room temperature for 24 hours in an attempt to prepare a HG gel composition corresponding to water-based composition E-41, but no gelation occurred. Since no gelation occurred, and thus no rheology control function (rheology modifying effect) was expected to occur, further testing was discontinued.

<Comparative Example 70 (HG Gel Composition Corresponding to E-42)>

10.0 parts of polyamide-polyether block polymer P-5, 5.0 parts of polyamide-polyether block polymer P-37, and 85.0 parts of HG were weighed using the same device as in Comparative example 38, and dissolved by stirring for 30 minutes while maintaining the temperature in the range of 80°C to 120°C. After the stirring was completed, the solution was transferred to another vessel, and allowed to stand at room temperature for 24 hours in an attempt to prepare a HG gel composition corresponding to water-based composition E-42, but no gelation occurred. Since no gelation occurred, and thus no rheology control function (rheology modifying effect) was expected to occur, further testing was discontinued.

<Comparative Example 71>

89.0 parts of deionized water was weighed using the same device as in Example 1, and heated to maintain the temperature at 60°C to 75°C. Meanwhile, 10.0 parts of polyamide P-1, and 1.0 parts of 2-(dimethylamino)ethanol as the neutralizing base were mixed at 120°C to obtain a liquid mixture. The liquid mixture was gradually added to the heated water in the flask with stirring. After the liquid mixture was added, the mixture was further stirred for 30 minutes while maintaining the temperature in the range of 50°C to 80°C, but did not become homogeneous. Since a homogeneous water-based composition could not be obtained, further testing was discontinued.

(Preparation of 3% Masterbatch)

3% aqueous masterbatches were prepared using the water-based compositions or gel compositions of the examples and comparative examples. Each composition was weighed, and to those that were unneutralized, a neutralization equivalent of 2-(dimethylamino)ethanol was added. Deionized water was added so that the solid content of the composition became 3%. The mixture was stirred with a lab disperser, and the rotation speed was gradually increased while avoiding air entrainment. The mixture was dispersed at a maximum of 2,500 rpm for 10 minutes to prepare a 3% aqueous masterbatch. However, for E-40 to E-43, dispersion was not completed in 10 minutes, and additional 10 to 20 minutes of dispersion was performed to prepare 3% aqueous masterbatches. Table 6 shows the formulations of 3% aqueous masterbatches.

[Table 6]

| Table 6 Formulation of 3% aqueous masterbatch | | | | | | | |
|---|---|---|---|---|---|---|---|
| | E-19, E-36 | E-37 | Gel composition | E-1~E-18, E-20, E-22, E-33~E-35, E-38, E-39, E-42, C-1~C-3 | E-41 | E-21, E-43 | E-40 |
| Water-based composition, Gel composition | 21 | 18 | 14 | 14 | 13 | 12 | 10 |
| 2-(dimethylamino) ethanol | - | - | x | - | - | - | - |
| Deionized water | 49 | 53 | 56-x | 56 | 57 | 58 | 60 |
| Total | 70 | 70 | 70 | 70 | 70 | 70 | 70 |

[Test on Rheology Control Function: Evaluation Methods and Evaluation Results]

Performance tests (Test examples 1 to 4) regarding the rheology control function of the water-based compositions or gel compositions of the examples and comparative examples obtained as described above were performed as below using the 3% aqueous masterbatches obtained as described above.

(Test Example 1: Evaluation of Aqueous Dispersion)

This test example is for evaluation of aqueous dispersions in which the water-based compositions or gel compositions of the examples and comparative examples are diluted with water and dispersed.

<Preparation of Aqueous Dispersion>

Deionized water was stirred with a lab disperser, to which a predetermined amount of 3% aqueous masterbatch obtained as described above was added and dispersed with a lab disperser (800 to 1,500 rpm × 10 minutes). Table 7 shows the formulations of the aqueous dispersions.

[Table 7]

| Table 7 Formulation of aqueous dispersion | |
|---|---|
| 3% Masterbatch | 10 |
| Deionized water | 50 |
| Total | 60 |

<Rheology Evaluation>

The steady-flow viscosity of the aqueous dispersion was measured at 25°C using a rheometer set with a 60-mm cone-shaped rotor. Measurement was performed at a shear rate from 0.01 s$^{-1}$ to 1,000 s$^{-1}$ (Low-High measurement), and then at a shear rate from 1,000 s$^{-1}$ to 0.01 s$^{-1}$ (High-Low measurement). The viscosity was read at shear rates of 0.1 s$^{-1}$ and 1,000 s$^{-1}$ in High-Low measurement. Table 8 shows the results of rheology evaluation in this test example. In Table 8, the description "Poor dispersion" indicates that separation occurred or coarse particles were generated in the liquid. The description "Below measurement limit" indicates that the viscosity was so low that it could not be measured by the device. The description "No gelation occurred" indicates that a gel composition could not be prepared and thus testing was not performed.

[Table 8]

| Table 8 Rheology Evaluation of Aqueous Dispersion | | | | | | |
|---|---|---|---|---|---|
| | Water-based composition | | Corresponding DMDG Gel Composition | | Corresponding HG Gel Composition | |
| | $0.1\ s^{-1}$ viscosity [mPa·s] | $1000s^{-1}$ viscosity [mPa·s] | $0.1\ s^{-1}$ viscosity [mPa·s] | $1000s^{-1}$ viscosity [mPa·s] | $0.1s^{-1}$ viscosity [mPa·s] | $1000s^{-1}$ viscosity [mPa·s] |
| E-1 | 1177 | 4 | Poor dispersion | Poor dispersion | No gelation occurred | No gelation occurred |
| E-2 | 1057 | 3 | Poor dispersion | Poor dispersion | No gelation occurred | No gelation occurred |
| E-4 | 412 | 3 | Poor dispersion | Poor dispersion | No gelation occurred | No gelation occurred |
| E-5 | 629 | 3 | Poor dispersion | Poor dispersion | No gelation occurred | No gelation occurred |
| E-7 | 300 | 2 | Poor dispersion | Poor dispersion | No gelation occurred | No gelation occurred |
| E-8 | 484 | 3 | Poor dispersion | Poor dispersion | No gelation occurred | No gelation occurred |
| E-9 | 351 | 3 | 25 | 2 | 45 | 2 |
| E-10 | 411 | 4 | Poor dispersion | Poor dispersion | No gelation occurred | No gelation occurred |
| E-11 | 1471 | 4 | Poor dispersion | Poor dispersion | No gelation occurred | No gelation occurred |
| E-12 | 513 | 2 | Below measurement limit | Below measurement limit | No gelation occurred | No gelation occurred |
| E-13 | 596 | 3 | Below measurement limit | Below measurement limit | No gelation occurred | No gelation occurred |
| E-16 | 828 | 2 | 109 | 2 | No gelation occurred | No gelation occurred |
| E-17 | 600 | 3 | Poor dispersion | Poor dispersion | No gelation occurred | No gelation occurred |
| E-20 | 1022 | 2 | Poor dispersion | Poor dispersion | No gelation occurred | No gelation occurred |
| E-21 | 364 | 2 | Poor dispersion | Poor dispersion | No gelation occurred | No gelation occurred |
| E-22 | 89 | 3 | Poor dispersion | Poor dispersion | No gelation occurred | No gelation occurred |
| E-33 | 994 | 4 | Poor dispersion | Poor dispersion | No gelation occurred | No gelation occurred |
| E-34 | 510 | 3 | Poor dispersion | Poor dispersion | No gelation occurred | No gelation occurred |
| E-35 | 382 | 2 | Poor dispersion | Poor dispersion | No gelation occurred | No gelation occurred |
| E-36 | 440 | 3 | Poor dispersion | Poor dispersion | Poor dispersion | Poor dispersion |
| E-37 | 516 | 3 | Poor dispersion | Poor dispersion | Poor dispersion | Poor dispersion |

(continued)

| Table 8 Rheology Evaluation of Aqueous Dispersion | | | | | | |
|---|---|---|---|---|---|---|
| | Water-based composition | | Corresponding DMDG Gel Composition | | Corresponding HG Gel Composition | |
| | $0.1\ s^{-1}$ viscosity [mPa·s] | $1000 s^{-1}$ viscosity [mPa·s] | $0.1\ s^{-1}$ viscosity [mPa·s] | $1000 s^{-1}$ viscosity [mPa·s] | $0.1 s^{-1}$ viscosity [mPa·s] | $1000 s^{-1}$ viscosity [mPa·s] |
| E-38 | 465 | 5 | Poor dispersion | Poor dispersion | No gelation occurred | No gelation occurred |
| E-39 | 1099 | 4 | Poor dispersion | Poor dispersion | No gelation occurred | No gelation occurred |
| E-40 | 306 | 4 | Poor dispersion | Poor dispersion | No gelation occurred | No gelation occurred |
| E-41 | 580 | 4 | Poor dispersion | Poor dispersion | No gelation occurred | No gelation occurred |
| E-42 | 426 | 3 | Poor dispersion | Poor dispersion | No gelation occurred | No gelation occurred |
| E-43 | 326 | 2 | Poor dispersion | Poor dispersion | No gelation occurred | No gelation occurred |
| C-1 | 9 | 2 | - | - | - | - |
| C-2 | 102 | 2 | - | - | - | - |
| C-3 | 194 | 3 | - | - | - | - |

(Test Example 2: Evaluation I of Emulsion Resin Liquid)

This test example is for evaluation of emulsion resin liquids in which the water-based compositions or gel compositions of the examples and comparative examples are diluted with emulsion resin and dispersed.

<Preparation of Emulsion Resin Liquid>

According to the formulation shown in Table 9, emulsion resin (trade name "Mowinyl (registered trademark) 7110", manufactured by Japan Coating Resin Corporation), deionized water and Texanol were stirred and mixed, to which 3% masterbatch obtained as described above was added and dispersed with a lab disperser (900 to 1,500 rpm × 10 minutes).

[Table 9]

| Table 9 Formulation of emulsion resin liquid I | |
|---|---|
| Mowinyl 7110 | 76.1 |
| Deionized water | 2.2 |
| Texanol | 8.8 |
| 3% Masterbatch | 13.3 |
| Total | 100.4 |

<Rheology Evaluation>

The steady-flow viscosity of the emulsion resin liquid was measured at 25°C using a rheometer set with a 60-mm cone-shaped rotor. Measurement was performed at a shear rate from 0.01 $s^{-1}$ to 1,000 $s^{-1}$ (Low-High measurement), and then at a shear rate from 1,000 $s^{-1}$ to 0.01 $s^{-1}$ (High-Low measurement). The viscosity was read at shear rates of 0.1 $s^{-1}$ and 1,000 $s^{-1}$ in High-Low measurement. Table 10 shows the results of rheology evaluation in this test example. In Table 10, the description "Poor dispersion" indicates that separation occurred or coarse particles were generated in the liquid. The description "No gelation occurred" indicates that a gel composition could not be prepared and thus testing was not performed.

[Table 10]

| Table 10 Rheology Evaluation of Emulsion Resin Liquid I | | | | | | |
|---|---|---|---|---|---|---|
| | Water-based composition | | Corresponding DMDG Gel Composition | | Corresponding HG Gel Composition | |
| | 0.1s$^{-1}$ viscosity [mPa·s] | 1000s$^{-1}$ viscosity [mPa·s] | 0.1s$^{-1}$ viscosity [mPa·s] | 1000s$^{-1}$ viscosity [mPa·s] | 0.1s$^{-1}$ viscosity [mPa·s] | 1000s$^{-1}$ viscosity [mPa·s] |
| E-1 | 950 | 28 | Poor dispersion | Poor dispersion | No gelation occurred | No gelation occurred |
| E-2 | 1701 | 30 | Poor dispersion | Poor dispersion | No gelation occurred | No gelation occurred |
| E-4 | 1710 | 33 | Poor dispersion | Poor dispersion | No gelation occurred | No gelation occurred |
| E-10 | 824 | 27 | Poor dispersion | Poor dispersion | No gelation occurred | No gelation occurred |
| E-11 | 906 | 30 | Poor dispersion | Poor dispersion | No gelation occurred | No gelation occurred |
| E-13 | 842 | 23 | 191 | 29 | No gelation occurred | No gelation occurred |
| E-18 | 811 | 28 | Poor dispersion | Poor dispersion | No gelation occurred | No gelation occurred |
| C-1 | 236 | 25 | - | - | - | - |
| C-2 | 642 | 19 | - | - | - | - |
| C-3 | 756 | 27 | - | - | - | - |
| Blank | 29 | 13 | - | - | - | - |

(Test Example 3: Evaluation of Dispersion Resin Liquid)

This test example is for evaluation of dispersion resin liquids in which the water-based compositions or gel compositions of the examples and comparative examples are diluted with dispersion resin and dispersed.

<Preparation of Dispersion Resin Liquid>

According to the formulation shown in Table 11, dispersion resin (trade name "HYDRAN (registered trademark) WLS-210", manufactured by DIC Corporation)", deionized water, glycerin and 2-propanol were stirred and mixed, to which 3% masterbatch obtained as described above was added and dispersed with a lab disperser (900 to 1,500 rpm × 10 minutes).

[Table 11]

| Table 11 Formulation of dispersion resin liquid | |
|---|---|
| HYDRAN WLS-210 | 33.3 |
| Deionized water | 25.3 |
| Glycerin | 6.9 |
| 2-propanol | 21.6 |
| 3% Masterbatch | 13.3 |

(continued)

| Table 11 Formulation of dispersion resin liquid | |
|---|---|
| Total | 100.4 |

<Rheology Evaluation>

The steady-flow viscosity of the dispersion resin liquid was measured at 25°C using a rheometer set with a 60-mm cone-shaped rotor. Measurement was performed at a shear rate from 0.01 $s^{-1}$ to 1,000 $s^{-1}$ (Low-High measurement), and then at a shear rate from 1,000 $s^{-1}$ to 0.01 $s^{-1}$ (High-Low measurement). The viscosity was read at shear rates of 0.1 $s^{-1}$ and 1,000 $s^{-1}$ in High-Low measurement. Table 12 shows the results of rheology evaluation in this test example. In Table 12, the description "Poor dispersion" indicates that separation occurred or coarse particles were generated in the liquid. The description "No gelation occurred" indicates that a gel composition could not be prepared and thus testing was not performed.

[Table 12]

| Table 12 Rheology Evaluation of Dispersion Resin Liquid | | | | | | |
|---|---|---|---|---|---|---|
| | Water-based composition | | Corresponding DMDG Gel Composition | | Corresponding HG Gel Composition | |
| | 0.1$s^{-1}$ viscosity [mPa·s] | 1000$s^{-1}$ viscosity [mPa·s] | 0.1 $s^{-1}$ viscosity [mPa·s] | 1000$s^{-1}$ viscosity [mPa·s] | 0.1 $s^{-1}$ viscosity [mPa·s] | 1000$s^{-1}$ viscosity [mPa·s] |
| E-6 | 1592 | 26 | Poor dispersion | Poor dispersion | No gelation occurred | No gelation occurred |
| E-10 | 768 | 21 | Poor dispersion | Poor dispersion | No gelation occurred | No gelation occurred |
| E-14 | 784 | 25 | Poor dispersion | Poor dispersion | No gelation occurred | No gelation occurred |
| E-15 | 703 | 24 | Poor dispersion | Poor dispersion | No gelation occurred | No gelation occurred |
| E-22 | 718 | 21 | Poor dispersion | Poor dispersion | No gelation occurred | No gelation occurred |
| C-1 | 114 | 19 | - | - | - | - |
| C-2 | 37 | 6 | - | - | - | - |
| C-3 | 582 | 19 | - | - | - | - |
| Blank | 9 | 11 | - | - | - | - |

(Test Example 4: Evaluation II of Emulsion Resin Liquid)

This test example is for evaluation of emulsion resin liquid in which the water-based compositions or gel compositions of the examples and comparative examples are diluted with emulsion resin different from that in Test Example 2 and dispersed.

<Preparation of Emulsion Resin Liquid>

According to the formulation shown in Table 13, emulsion resin (trade name "POLYDUREX (registered trademark) G620S", manufactured by Asahi Kasei Corp.), deionized water and Texanol were stirred and mixed, to which 3% masterbatch obtained as described above was added and dispersed with a lab disperser (900 to 1,500 rpm × 10 minutes).

[Table 13]

| Table 13 Formulation of emulsion resin liquid II | |
|---|---|
| POLYDUREX G620S | 76.1 |
| Deionized water | 7.5 |
| Texanol | 3.5 |
| 3% Masterbatch | 13.3 |
| Total | 100.4 |

<Rheology Evaluation>

The steady-flow viscosity of the emulsion resin liquid was measured at 25°C using a rheometer set with a 60-mm cone-shaped rotor. Measurement was performed at a shear rate from 0.01 s$^{-1}$ to 1,000 s$^{-1}$ (Low-High measurement), and then at a shear rate from 1,000 s$^{-1}$ to 0.01 s$^{-1}$ (High-Low measurement). The viscosity was read at shear rates of 0.1 s$^{-1}$ and 1,000 s$^{-1}$ in High-Low measurement. Table 14 shows the results of rheology evaluation in this test example. In Table 14, the description "Poor dispersion" indicates that separation occurred or coarse particles were generated in the liquid. The description "No gelation occurred" indicates that a gel composition could not be prepared and thus testing was not performed.

[Table 14]

| Table 14 Rheolgy Evaluation of Emulsion Resin Liquid II | | | | | | |
|---|---|---|---|---|---|---|
| | Water-based composition | | Corresponding DMDG Gel Composition | | Corresponding HG Gel Composition | |
| | 0.1s$^{-1}$ viscosity [mPa·s] | 1000s$^{-1}$ viscosity [mPa·s] | 0.1s$^{-1}$ viscosity [mPa·s] | 1000s$^{-1}$ viscosity [mPa·s] | 0.1s$^{-1}$ viscosity [mPa·s] | 1000s$^{-1}$ viscosity [mPa·s] |
| E-1 | 2029 | 31 | Poor dispersion | Poor dispersion | No gelation occurred | No gelation occurred |
| E-2 | 4886 | 30 | Poor dispersion | Poor dispersion | No gelation occurred | No gelation occurred |
| E-3 | 1218 | 27 | Poor dispersion | Poor dispersion | No gelation occurred | No gelation occurred |
| E-5 | 5397 | 37 | Poor dispersion | Poor dispersion | No gelation occurred | No gelation occurred |
| E-19 | 1026 | 30 | Poor dispersion | Poor dispersion | No gelation occurred | No gelation occurred |
| C-1 | 990 | 30 | - | - | - | - |
| Blank | 34 | 12 | - | - | - | - |

[Discussion on Evaluation Results]

Polyamide and polyamide-polyether block polymers have characteristics of increasing the viscosity at low shear rates (0.1 s$^{-1}$ in the above test examples) while suppressing an increase in the viscosity at high shear rates (1,000 s$^{-1}$ in the above test examples). Such viscosity is suitable for spray coating, and is advantageous in preventing settling, preventing sagging, improving orientation of luster pigments, which is known as flip-flop properties, and improving the appearance of a coating film. Among the evaluated examples, polyamide-polyether block polymers P-5 to P-12 and P-16 used in E-1 to E-8, E-19, E-20, E-22 and E-33 are obtained by reacting a polyether portion with polyamide P-1 used in C-1. The 0.1 s$^{-1}$ viscosities of E-1 to E-8, E-19, E-20, E-22 and E-33 are higher than C-1, indicating that they have higher rheology control function. The water-based compositions using the polyamide-polyether block polymer are also exhibited generally high rheology modifying effect compared to the other comparative examples, C-2 and C-3. However, although E-22 in the aqueous dispersion is superior to C-1 having the same polyamide skeleton, it is inferior to C-2 and C-3. E-22 is a polyamide-polyether block polymer using the same P-6 as with E-2, but since it contains methoxy PEG in the formulation, the mass% of $(R_4O)_n$, in which $R_4$ is 2, exceeds a certain amount, which is considered to have reduced the rheology modifying effect. Further, E-19 has a formulation containing only the amine salt of polyamide-polyether block polymer P-6 and water, and not containing solvent, but it was possible to prepare a water-based composition. There are cases where solvents contained in the rheology control agent are not desired for the paints, and the like. E-19 is a water-based composition containing a rheology control function that can be applied to such cases. The rheology modifying effect of E-19 to the water-based resin composition is equal to or greater than that of C-1. On the other hand, when using polyamide P-1, which has a structure in which a polyether portion is removed from the polyamide-polyether block polymer used in E-19, a homogeneous water-based composition could not be prepared without a solvent (see Comparative example 71). This indicates that polyamide P-1 does not have sufficient dispersibility to water and that a solvent is required to disperse polyamide P-1 in water. Polyamide-polyether block polymer P-6 does not necessarily require a solvent to disperse it in water, and it has a sufficient rheology control function. All of the water-based compositions of the examples and comparative examples maintained the 1,000 s$^{-1}$ viscosity comparable to that of a Blank (containing neither polyamide nor polyamide-polyether block polymer).

The DMDG gel compositions and HG gel compositions, when used in the formulations containing water , are found to be poorly dispersed, or, even if they are dispersed, are less effective than the water-based compositions, or not gelled.

(Preparation of 3% Resin Masterbatch)

3% resin masterbatches were prepared using Example 6 (E-6) and Comparative example 1 (C-1). A dispersion resin (trade name "NeoPac (registered trademark) E-123", manufactured by Covestro (Netherlands) B.V.) was neutralized with 2-(dimethylamino)ethanol, to which each composition was added so that the solid content became 3%. The mixture was stirred with a lab disperser, and the rotation speed was gradually increased while avoiding air entrainment. The mixture was dispersed at a maximum of 2,500 rpm for 10 minutes to prepare a 3% resin masterbatch. Table 15 shows the formulations of 3% resin masterbatches.

[Table 15]

| Table 15 Formulation of 3% resin masterbatch | |
|---|---|
| NeoPac E-123 | 79.9 |
| 2-(dimethylamino)ethanol | 0.1 |
| Water-based composition | 20.0 |
| Total | 100.0 |

[Test on Flip-Flop Properties: Evaluation Methods and Evaluation Results]

Performance tests (Test example 5) regarding the flip-flop properties of the water-based compositions of the examples and comparative examples obtained as described above were performed as below using the 3% resin masterbatches obtained as described above, and an acrylic rheology control agent (trade name "RHEOVIS (registered trademark) AS1130" (hereinafter, abbreviated as "acrylic-based A"), manufactured by BASF Societas Europaea) as a comparison.

(Test Example 5: Evaluation of Aqueous Paint Composition Containing Luster Pigment)

This test example is for evaluation of aqueous paint compositions in which the water-based compositions of the examples and comparative examples contain an aluminum pigment as a luster pigment.

<Preparation of Aluminum Slurry>

According to the formulation shown in Table 16, aluminum pigment (trade name "EMERAL (registered trademark) EMR-D6340", manufactured by Toyo Aluminum K.K.), dispersant (trade name "DISPARLON (registered trademark) AQ-320", manufactured by Kusumoto Chemicals, Ltd.) and deionized water were stirred and mixed with a lab disperser to obtain an aluminum slurry.

[Table 16]

| Table 16 Formulation of aluminum slurry | |
|---|---|
| EMERAL EMR-D6340 | 5.1 |
| DISPARLON AQ-320 | 0.3 |
| Deionized water | 9.5 |
| Total | 14.9 |

<Preparation of Aqueous Paint Composition>

According to the formulation shown in Table 17, dispersion resin (trade name "NeoPac E-123", manufactured by Covestro (Netherlands) B.V.), dipropylene glycol monobutyl ether, 2-(dimethylamino)ethanol, deionized water and wetting agent (trade name "DISPARLON AQ-7120", manufactured by Kusumoto Chemicals, Ltd.) were stirred and mixed, to which 3% masterbatch obtained as described above or acrylic-based A as the rheology control agent was added and dispersed with a lab disperser (1,500 to 2,000 rpm $\times$ 10 minutes). Further, the rotation speed of the lab disperser was changed to 1,000 rpm, and the aluminum slurry obtained as described above was added and stirred for 10 minutes.

[Table 17]

| Table 17 Formulation of aluminum paint | |
|---|---|
| NeoPac E-123 | 57.0 |
| Dipropylene glycol monobutyl ether | 7.1 |
| 2-(dimethylamino)ethanol | 0.1 |
| Deionized water | 20.7-x |
| DISPARLON AQ-7120 | 0.6 |
| Rheology control agent | x |
| Aluminum slurry | 14.9 |
| Total | 100.4 |
| x is the value at which the solid content is 0.4 or 0.3. | |

The resulting aqueous paint composition was diluted the next day with deionized water using a Ford cup #4 to 20 seconds at 25°C. The amount of deionized water used for dilution was set not to exceed 5% of the mass of the paint since the solid content of the paint largely changes as the amount of dilution increases. When the acrylic-based A was added in the same solid content as the water-based composition, the amount of deionized water required for dilution exceeded 5% of the mass of the paint, so the additive amount was reduced, and the same procedure was repeated.

<Coating Test>

A tin plate was coated using an automatic spray coater (trade name "XY coater", manufactured by NCC Corporation) in an environment of 23°C and 50% RH. The coating was applied by adjusting the ejection amount so that the dry film thickness was 11 $\mu$m to 14 $\mu$m, allowed to stand for 5 minutes, and then dried and cured in a thermostatic chamber at 80°C for 20 minutes. The brightness (L*) of the cured coating film was measured at observation angles 15°, 45° and 110° using a portable multi-angle spectrophotometer (trade name "MA-T12", manufactured by X-Rite, Inc.). Further, the flop index (F. I.) was calculated by the following formula (3). A higher flop index indicates better flip-flop properties.

$$F.\ I. = 2.69 \times (L^*_{15} - L^*_{110})^{1.11}/(L^*_{45})^{0.85} \quad (3)$$

<Rheology Evaluation>

The steady-flow viscosity of the diluted aqueous paint composition was measured at 25°C using a rheometer set with a 60-mm cone-shaped rotor. Measurement was performed at a shear rate from 0.01 s$^{-1}$ to 1,000 s$^{-1}$ (Low-High measurement), and then at a shear rate from 1,000 s$^{-1}$ to 0.01 s$^{-1}$ (High-Low measurement). The viscosity was read at shear rates of 0.1 s$^{-1}$ and 1,000 s$^{-1}$ in High-Low measurement. Table 18 shows the results of rheology evaluation in this test example and the results of the above coating test.

[Table 18]

| Table 18 Test results of flip-flop properties | | | | | |
|---|---|---|---|---|---|
| | Additive amount [%] | Dilution ratio [%] | F.I.[-] | 0.1s$^{-1}$ viscosity [mPa·s] | 1000s$^{-1}$ viscosity [mPa·s] |
| E-6 | 0.4 | 0.2 | 23.1 | 2694 | 27 |
| C-1 | 0.4 | 0.6 | 21.9 | 2577 | 27 |
| Acrylic-based A | 0.3 | 3.9 | 19.5 | 688 | 44 |
| Blank | - | - | 20.5 | 115 | 12 |
| No dilution was performed on Blank, since the time by Ford cup #4 was 12 seconds. | | | | | |

[Summary and Discussion of Evaluation Results]

Polyamide and polyamide-polyether block polymers increased the viscosity at low shear rates (0.1 s$^{-1}$ in the above test examples) while suppressing an increase in the viscosity at high shear rates (1,000 s$^{-1}$ in the above test examples). It is considered that such rheology characteristics caused high flip-flop properties. Further, the flip-flop properties of aqueous paint composition were higher in water-based composition E-6 using polyamide-polyether block polymer P-10 than in water-based composition C-1 using polyamide P-1. It is considered that using a water-based composition containing a polyamide-polyether block polymer as a rheology control agent makes it possible to form a coating film with excellent flip-flop properties.

[Test on Combined Effect with Other Rheology Control Agents: Evaluation Methods and Evaluation Results]

Performance tests (Test examples 6 to 8) regarding the combined effect with other rheology control agents of the water-based compositions of the examples obtained as described above were performed as below using the 3% aqueous masterbatches obtained as described above.

(Test Example 6: Evaluation of Aqueous Dispersion)

This test example is for evaluation of aqueous dispersions obtained by diluting and dispersing the water-based compositions of the examples with water, and by mixing the resulting aqueous dispersions with other rheology control agents. The rheology control agents used in combination with the aqueous dispersions of the water-based compositions of the examples are an urethane-based rheology control agent (trade name "ADEKA NOL (registered trademark) UH-752" (hereinafter, abbreviated as "urethane-based A"), trade name "ADEKA NOL UH-540" (hereinafter, abbreviated as "urethane-based B"), all manufactured by Adeka Corporation), (trade name "ACRYSOL RM-2020NPR" (hereinafter, abbreviated as "urethane-based C"), manufactured by Dow Chemical Co.), and an acrylic-based rheology control agent (trade name "DISPARLON AQ-021" (hereinafter, abbreviated as "acrylic-based B"), manufactured by Kusumoto Chemicals, Ltd.).

<Preparation of Aqueous Dispersion>

Deionized water was stirred with a lab disperser, to which a predetermined amount of 3% aqueous masterbatch obtained as described above was added. Then, a predetermined amount of other rheology control agent for use in combination was further added thereto, and the mixture was dispersed with a lab disperser (800 to 1,500 rpm $\times$ 10 minutes). Table 19 shows the formulations of the aqueous dispersions. For comparison, an aqueous dispersion diluted with water so that the solid content was 1.0% was also prepared.

[Table 19]

| Table 19 Formulation of aqueous dispersion in combination with rheology control agent | | |
|---|---|---|
| | 5/5 formulation | 2/8 formulation |
| 3% Masterbatch | 10 | 16 |

(continued)

| Table 19 Formulation of aqueous dispersion in combination with rheology control agent | | |
|---|---|---|
| | 5/5 formulation | 2/8 formulation |
| Other Rheology control agent | x | y |
| Deionized water | 50-x | 44-y |
| Total | 60 | 60 |
| x is the value at which the solid content is 0.3, and y is the value at which the solid content is 0.12. | | |

<Rheology Evaluation>

The steady-flow viscosity of the emulsion resin liquid was measured at 25°C using a rheometer set with a 60-mm cone-shaped rotor. Measurement was performed at a shear rate from 0.01 s$^{-1}$ to 1,000 s$^{-1}$ (Low-High measurement), and then at a shear rate from 1,000 s$^{-1}$ to 0.01 s$^{-1}$ (High-Low measurement). The viscosity was read at shear rate of 0.1 s$^{-1}$ and 1,000 s$^{-1}$ in High-Low measurement. Table 20 shows the results of rheology evaluation in this test example.

[Table 20]

| Table 20 Rheology Evaluation of aqueous dispersion in combination with rheology control agent | | |
|---|---|---|
| | 0.1 s$^{-1}$ viscosity [mPa·s] | 1000s$^{-1}$ viscosity [mPa·s] |
| E-1 | 2847 | 6 |
| E-2 | 2563 | 6 |
| E-4 | 3884 | 7 |
| Urethane-based A | 22 | 1 |
| Urethane-based B | 4 | 2 |
| Urethane-based C | 15 | 2 |
| Acrylic-based B | 25 | 10 |
| Urethane-based A/E-1 (2/8) | 4335 | 9 |
| Urethane-based B/E-1 (2/8) | 3346 | 8 |
| Urethane-based C/E-2 (2/8) | 2747 | 7 |
| Acrylic-based B/E-4 (5/5) | 4668 | 17 |

(Test Example 7: Evaluation of Emulsion Resin Liquid)

This test example is for evaluation of emulsion resin liquids obtained by diluting and dispersing the water-based compositions of the examples with emulsion resins, and by mixing the resulting emulsion resin liquids with other rheology control agents. As the rheology control agent, an amide-based rheology control agent (production example S1 described in WO 2022/097747 (hereinafter, abbreviated as "amide-based")) was used in combination with the emulsion resin liquids of the water-based compositions of the examples.

<Preparation of Emulsion Resin Liquid>

According to the formulation shown in Table 21, emulsion resin (trade name "Mowinyl 7110", manufactured by Japan Coating Resin Corporation), deionized water and Texanol were stirred and mixed, to which 3% resin masterbatch obtained as described above was added. Then, a predetermined amount of other rheology control agent for use in combination was further added thereto, and the mixture was dispersed with a lab disperser (900 to 1,500 rpm × 10 minutes). For comparison, an emulsion resin liquid having a solid content of 0.4% was also prepared.

[Table 21]

| Table 21 Formulation of emulsion resin liquid in combination with rheology control agent | |
|---|---|
| Mowinyl 7110 | 76.1 |
| Deionized water | 5.5-x |
| Texanol | 8.8 |
| Other Rheology control agent | x |
| 3% Masterbatch | 10.0 |
| Total | 100.4 |
| x is the value at which the solid content is 0.1. | |

<Rheology Evaluation (Recovery Measurement)>

The viscosity recovery of the emulsion resin liquid was measured at 25°C using a rheometer set with a 60-mm cone-shaped rotor. The viscosity was measured at a shear rate of 0.1 $s^{-1}$ for 1 minute (step 1), at a shear rate of 1,000 $s^{-1}$ for 10 seconds (step 2), and at a shear rate of 0.1 $s^{-1}$ for 2 minutes (step 3) in this order at 1 second intervals. The viscosity was read 5 seconds after starting step 3. Table 22 shows the results of rheology evaluation in this test example.

[Table 22]

| Table 22 Rheology Evaluation of emulsion resin liquid in combination with rheology control agent | |
|---|---|
| | Viscosity in 5 seconds after starting step 3 [mPa·s] |
| E-4 | 906 |
| Amide-based | 212 |
| Amide-based/E-4 (1/3) | 966 |

(Test Example 8: Evaluation of Dispersion Resin Liquid)

This test example is for evaluation of dispersion resin liquids obtained by diluting and dispersing the water-based compositions of the examples with dispersion resins, and by mixing the resulting dispersion resin liquids with other rheology control agents. As the rheology control agent, an acrylic-based rheology control agent (trade name "DISPARLON AQ-001" (hereinafter, abbreviated as "acrylic-based C"), manufactured by Kusumoto Chemicals, Ltd.) was used in combination with the dispersion resin liquids of the water-based compositions of the examples.

<Preparation of Dispersion Resin Liquid>

According to the formulation shown in Table 23, dispersion resin (trade name "HYDRAN WLS-210", manufactured by DIC Corporation)", deionized water, glycerin and 2-propanol were stirred and mixed, to which 3% resin masterbatch obtained as described above was added. Then, a predetermined amount of other rheology control agent for use in combination was further added thereto, and dispersed with a lab disperser (900 to 1,500 rpm × 10 minutes). For comparison, a dispersion resin liquid having the solid content of 0.4% was also prepared.

[Table 23]

| Table 23 Formulation of dispersion resin liquid in combination with rheology control agent | | |
|---|---|---|
| | 5/5 formulation | 1/7 formulation |
| HYDRAN WLS-210 | 33.3 | 33.3 |
| Deionized water | 31.9-x | 26.9-y |
| Glycerin | 6.9 | 6.9 |
| 2-propanol | 21.6 | 21.6 |
| Other Rheology control agent | x | y |

(continued)

| Table 23 Formulation of dispersion resin liquid in combination with rheology control agent | | |
|---|---|---|
| | 5/5 formulation | 1/7 formulation |
| 3% Masterbatch | 6.7 | 11.7 |
| Total | 100.4 | 100.4 |
| x is the value at which the solid content is 0.3, and y is the value at which the solid content is 0.05. | | |

<Rheology Evaluation (Recovery Measurement)>

The viscosity recovery of the dispersion resin liquid was measured at 25°C using a rheometer set with a 60-mm cone-shaped rotor. The viscosity was measured at a shear rate of 0.1 $s^{-1}$ for 1 minute (step 1), at a shear rate of 1,000 $s^{-1}$ for 10 seconds (step 2), and at a shear rate of 0.1 $s^{-1}$ for 2 minutes (step 3) in this order at 1 second intervals. The viscosity was read 10 seconds after starting step 3. Table 24 shows the results of rheology evaluation in this test example.

[Table 24]

| Table 24 Rheology Evaluation of emulsion resin liquid in combination with rheology control agent | |
|---|---|
| | Viscosity in 10 seconds after starting step 3 [mPa·s] |
| E-10 | 282 |
| Acrylic-based C | 25 |
| Acrylic-based C/E-10 (2/2) | 329 |
| Acrylic-based C/E-10 (1/7) | 431 |

[Summary and Discussion of Evaluation Results]

Compared to the viscosity of the water-based composition using the polyamide-polyether block polymer (having a rheology control function) or other rheology control agents alone, the viscosity was higher when these were used in combination. Usually, when a water-based composition using a polyamide-polyether block polymer is used in combination with other rheology control agents, the total amount of the rheology control agent does not change, so the viscosity is close to the arithmetic mean. Alternatively, when the amount of one or both of the rheology control agents is not sufficient to produce viscosity, the viscosity is lower than the arithmetic mean. However, when the water-based composition using the polyamide-polyether block polymer was used in combination with other rheology control agents, the viscosity was found to be higher than the arithmetic mean. Therefore, it is considered that the water-based composition using the polyamide-polyether block polymer is likely to exhibit special interactions with other rheology control agents.

[Test on Dispersing Ability: Evaluation Methods and Evaluation Results]

Performance tests (Test examples 9 and 10) regarding the dispersing ability of the water-based compositions of the examples obtained as described above were performed as below using the water-based compositions obtained as described above.

(Test Example 9: CNT Dispersing Ability)

This test example is for evaluation of the dispersing ability of the water-based composition of the examples to disperse a CNT.
According to the formulation shown in Table 25, the water-based compositions (E-23 to E-32), deionized water and CNT powder (trade name "TUBALL (registered trademark) 01RW03", manufactured by OCSiAl) were weighed, and pre-dispersed (10,000 to 11,000 rpm × 2 hours) using a precision dispersion/emulsification machine (trade name "CLEARMIX (registered trademark) CLM-0.8S", manufactured by M Technique Co., Ltd.). Then, the dispersion liquid after the pre-dispersion was subjected to main dispersion using a wet-type media-less nanomizer (trade name "Nano Vater (registered trademark) C-ES", Yoshida Kikai Co., Ltd.) (for the first pass, the "ejection" parameter was set at 30, for the second pass, the "ejection pressure" was set at 30 MPa, and for the 3rd to 13th passes, the "ejection pressure" was set at 70 MPa. ) to obtain a CNT dispersion liquid.

[Table 25]

| Table 25 Formulation of CNT dispersion liquid | | |
| --- | --- | --- |
| | E-23, E-24, E-26~E-32 | E-25 |
| Water based composition | 3.3 | 10.0 |
| Deionized water | 96.7 | 90.0 |
| CNT | 0.5 | 0.5 |
| Total | 100.5 | 100.5 |

<Dispersibility Evaluation>

The CNT dispersion liquid obtained as described above was diluted with deionized water so that the CNT concentration was 0.001%. The optical density was measured using a spectrophotometer. The dispersion performance was assessed by comparing the optical density at 500 nm. An optical density of 0.45 or greater and less than 0.50 was rated as "good dispersibility", and an optical density of 0.50 or greater was rated as "very good dispersibility". Table 26 shows the evaluation results.

[Table 26]

| Table 26 Evaluation results of CNT dispersion liquid | |
| --- | --- |
| | Optical density [-] |
| E-23 | 0.51 |
| E-24 | 0.50 |
| E-25 | 0.45 |
| E-26 | 0.48 |
| E-27 | 0.51 |
| E-28 | 0.49 |
| E-29 | 0.49 |
| E-30 | 0.50 |
| E-31 | 0.51 |
| E-32 | 0.50 |
| Blank | Not dispersed |

(Test Example 10: Organic Pigment Dispersing Ability)

This test example is for evaluation of the dispersing ability of the water-based composition of the examples to disperse an organic pigment.

According to the formulation shown in Table 27, organic pigments such as cyan: trade name "Heliogen (registered trademark) Blue D7088" or magenta: trade name "Cinquasia (registered trademark) Magenta D4500J" (all manufactured by Sun Chemical Ltd.), deionized water, water-based composition (E-26, E-27) and defoamer (trade name "DISPARLON (registered trademark) AQ-7533N", manufactured by Kusumoto Chemicals, Ltd.) were weighed. In addition, 400 g of zirconia beads with 0.3 mm diameter were added. After dispersion for 3 hours using a paint shaker, the zirconia beads were separated to obtain an organic pigment dispersion liquid.

[Table 27]

| Table 27 Formulation of organic pigment dispersion liquid | |
| --- | --- |
| Organic pigment | 18.7 |
| Deionized water | 61.6 |
| Water-based composition | 18.7 |

(continued)

| Table 27 Formulation of organic pigment dispersion liquid | |
|---|---|
| DISPARLON AQ-7533N | 1.0 |
| Total | 100.0 |

<Dispersibility Evaluation>

The organic pigment dispersion liquid obtained as described above was assessed by a viscosity and particle size distribution system. The viscosity was measured by measuring the steady-flow of the organic pigment dispersion liquid at 25°C at a shear rate from $1\,s^{-1}$ to $100\,s^{-1}$ (Low-High measurement) using a rheometer set with a 60-mm cone-shaped rotor. The particle size distribution was measured using a dynamic light scattering particle size distribution analyzer. The dispersion performance was assessed by the viscosity at a shear rate of $10\,s^{-1}$ and D50. A viscosity of 100 mPa·s or less was rated as "good dispersibility", and a D50 of 0.3 $\mu$m or less was rated as "good dispersibility". Table 28 shows the evaluation results.

[Table 28]

| Table 28 Evaluation results of organic pigment dispersion liquid | | | | |
|---|---|---|---|---|
| | Cyan | | Magenta | |
| | $10s^{-1}$ viscosity [mPa·s] | D50[$\mu$m] | $10s^{-1}$ viscosity [mPa·s] | D50[$\mu$m] |
| E-26 | 6 | 0.17 | 93 | 0.22 |
| E-27 | 14 | 0.21 | 66 | 0.20 |
| Blank | Not dispersed | Not dispersed | Not dispersed | Not dispersed |

[Discussion on Evaluation Results]

Regarding the dispersing ability, Comparative example 4 could not prepare an aqueous dispersion with 30% concentration, while all the example expect E-25 could adjust the concentration to 30%, and exhibited good dispersibility in evaluation of the CNT dispersion liquid and the organic pigment dispersion liquid. Although Comparative example 4 used the polyamide with highest acid value (= highest hydrophilicity) among P-1 to P-4, the hydrophilicity was insufficient.
E-25, in which the terminal ($R_3$) has 18 carbon atoms, could not prepare an aqueous dispersion with 30% concentration, but the test could be performed with an aqueous dispersion with 10% concentration. The dispersion performance of E-25 in the CNT dispersion liquid was slightly inferior to the others, and a preferable number of terminal carbons ($R_3$) was 1.

**Claims**

1. A water-based composition comprising:

   a block copolymer (A1) represented by the following general formula (1); and water,

   $$(X\text{-})_a[R_1(\text{-}W_1\text{-}R_2\text{-}W_2)_b]_m(\text{-}R_1(\text{-}X)_c)_p \ldots \qquad (1)$$

   (in the formula (1), X is independently a carboxyl group or a salt thereof, or Y, Y is $R_3\text{-}(OR_4)_n\text{-}Z\text{-}$, $R_1$ is independently a divalent and/or trivalent hydrocarbon group having 2 to 52 carbon atoms, $R_2$ is a divalent hydrocarbon group having 2 to 36 carbon atoms, $R_3$ is a hydrocarbon group having 1 to 22 carbon atoms, $R_4$ is a divalent hydrocarbon group having 2 to 4 carbon atoms, $W_1$ and $W_2$ are secondary amide bonds, Z is an ester bond or an amide bond, a is an integer from 1 to 11, b is 1 or 2, c is 1 or 2, m is an integer from 0 to 10, n is an integer from 2 to 100, and p is an integer from 1 to 11), wherein
   among all X in the block copolymer (A1) represented by the formula (1), X which is Y is 5 mol% or greater, and a mass ratio of the block copolymer (A1) to water, A1/water, is 5/95 to 50/50.

2. The water-based composition according to claim 1, containing

the block copolymer (A1) in which at least a part of X in the formula (1) is a carboxyl group or a salt thereof.

3. The water-based composition according to claim 2, wherein
X which is a carboxyl group or a salt thereof is 30 mol% or greater relative to a total of X in the block copolymer (A1) contained in the water-based composition.

4. The water-based composition according to claim 1, wherein
a remaining mass of all the block copolymer (A1) contained in the water-based composition, excluding the Y portion, is 50 mass% or greater and 90 mass% or less relative to a total mass of the block copolymer (A1).

5. The water-based composition according to claim 1, wherein
the block copolymer (A1) has an acid value of 15 or greater and 80 or less.

6. The water-based composition according to claim 1, wherein
50 mol% or greater of either or both of $R_1$ and $R_2$ in the formula (1) is a divalent hydrocarbon group having 34 or more carbon atoms.

7. The water-based composition according to claim 1, wherein
at least a part of X in the formula (1) is Y, and a mass of $(OR_4)_n$ moiety in which $R_4$ has 2 carbon atoms is 5 mass% or greater and 45 mass% or less relative to a total mass of the block copolymer (A1).

8. The water-based composition according to claim 1, further comprising

a polyether (B1) represented by the following general formula (2), the polyether (B1) having a boiling point of 230°C or higher,

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100), wherein
at least a part of X in the formula (1) is Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is 5 mass% or greater and 50 mass% or less relative to a total mass of the block copolymer (A1) and the polyether (B 1).

9. The water-based composition according to claim 1, further comprising

a polyether (B1) represented by the following general formula (2), the polyether (B1) having a boiling point of 230°C or higher,

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100), wherein
at least a part of X in the formula (1) is Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is 5 mass% or greater and 50 mass% or less relative to a total mass of a non-volatile component in the water-based composition.

10. The water-based composition according to claim 1, containing
the block copolymer (A1) in which all X in the formula (1) is Y.

11. The water-based composition according to claim 10, wherein
among X in the block copolymer (A1) represented by the formula (1), X which is Y is 80 mol% or greater.

12. The water-based composition according to claim 1, further comprising

a polyether (B1) represented by the following general formula (2), the polyether (B1) having a boiling point of 230°C or higher,

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100), wherein
a mixture of the block copolymer (A1) and the polyether (B1) has an acid value of 10 or less.

13. The water-based composition according to claim 1, wherein
$R_3$ in the formula (1) has 1 to 4 carbon atoms.

14. The water-based composition according to claim 1, wherein
the block copolymer (A1) with m=0 in the formula (1) is 50 mass% or less relative to a total mass of the block copolymer (A1) contained in the water-based composition.

15. The water-based composition according to claim 1, further comprising

a polyether (B1) represented by the following general formula (2), the polyether (B1) having a boiling point of 230°C or higher,

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100), wherein
at least a part of X in the formula (1) is Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is 50 mass% or greater and 90 mass% or less relative to a total mass of the block copolymer (A1) and the polyether (B 1).

16. The water-based composition according to claim 1, further comprising

a polyether (B1) represented by the following general formula (2), the polyether (B1) having a boiling point of 230°C or higher,

$$R_5\text{-}(OR_6)_q\text{-}OR_7 \ldots \qquad (2)$$

(in the formula (2), $R_5$ is a hydrocarbon group having 1 to 22 carbon atoms, $R_6$ is a divalent hydrocarbon group having 2 to 4 carbon atoms, $R_7$ is a hydrogen atom or a hydrocarbon group having 1 to 4 carbon atoms, and q is an integer from 2 to 100), wherein
at least a part of X in the formula (1) is Y, and a total mass of $(OR_4)_n$ moiety in which $R_4$ has 2 carbon atoms in the block copolymer (A1) and $(OR_6)_q$ moiety in which $R_6$ has 2 carbon atoms in the polyether (B1) is 50 mass% or greater and 90 mass% or less relative to a total mass of a non-volatile component in the water-based composition.

17. A diluted composition obtainable by diluting the water-based composition according to any one of claims 1 to 16, wherein
a mass ratio of the block copolymer (A1) to water, A1/water, is 0.01/99.99 to 5/95.

18. The diluted composition according to claim 17, further containing
at least one rheology control agent different from the block copolymer (A1), the rheology control agent being selected from the group consisting of urethane-based rheology control agents, acrylic rheology control agents, cellulose-based modified rheology control agents, polysaccharide-based rheology control agents, amide-based rheology control agents, polyamide-based rheology control agents, urea-based rheology control agents, cellulose nanofibers and inorganic rheology control agents.

19. An aqueous paint composition comprising:

the water-based composition according to any one of claims 1 to 16; and

a luster pigment.

20. The aqueous paint composition according to claim 19, further comprising
at least one rheology control agent different from the block copolymer (A1), the rheology control agent being selected from the group consisting of urethane-based rheology control agents, acrylic rheology control agents, cellulose-based modified rheology control agents, polysaccharide-based rheology control agents, amide-based rheology control agents, polyamide-based rheology control agents, urea-based rheology control agents, cellulose nanofibers and inorganic rheology control agents.

## INTERNATIONAL SEARCH REPORT

International application No.

**PCT/JP2023/026056**

| A. | CLASSIFICATION OF SUBJECT MATTER |
|---|---|

*C08G 69/48*(2006.01)i; *C09D 5/36*(2006.01)i; *C09D 7/43*(2018.01)i; *C09D 201/00*(2006.01)i; *C09K 23/42*(2022.01)i
FI:    C08G69/48; C09D5/36; C09D201/00; C09K23/42; C09D7/43

According to International Patent Classification (IPC) or to both national classification and IPC

| B. | FIELDS SEARCHED |
|---|---|

Minimum documentation searched (classification system followed by classification symbols)

C08G69/48; C09D5/36; C09D7/43; C09D201/00; C09K23/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2014-520947 A (CRODA INTERNATIONAL PLC) 25 August 2014 (2014-08-25) claims, examples | 1-20 |
| A | CN 110669205 A (HEBEI CHENYANG INDUSTRY AND TRADE GROUP CO., LTD.) 10 January 2020 (2020-01-10) claims, examples | 1-20 |
| A | JP 2018-193435 A (TORAY INDUSTRIES, INC.) 06 December 2018 (2018-12-06) claims, examples | 1-20 |
| A | JP 2004-518006 A (ARIZONA CHEMICAL CO.) 17 June 2004 (2004-06-17) claims, examples | 1-20 |
| A | JP 2010-090188 A (UNITIKA LTD.) 22 April 2010 (2010-04-22) claims, examples | 1-20 |
| A | JP 2018-003002 A (KANAE TORYO KK) 11 January 2018 (2018-01-11) claims, examples | 1-20 |

✓ Further documents are listed in the continuation of Box C.     ✓ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

47

## INTERNATIONAL SEARCH REPORT

| International application No. |
|---|
| **PCT/JP2023/026056** |

**C.      DOCUMENTS CONSIDERED TO BE RELEVANT**

| Category* | Citation of document, with indication, where appropriate, of the relevant passages | Relevant to claim No. |
|---|---|---|
| A | JP 2003-113342 A (NIPPON PAINT CO., LTD.) 18 April 2003 (2003-04-18)<br>claims, examples | 1-20 |

Form PCT/ISA/210 (second sheet) (January 2015)

**INTERNATIONAL SEARCH REPORT**
Information on patent family members

International application No.

**PCT/JP2023/026056**

| Patent document cited in search report | | | Publication date (day/month/year) | Patent family member(s) | | | Publication date (day/month/year) |
|---|---|---|---|---|---|---|---|
| JP | 2014-520947 | A | 25 August 2014 | US 2014/0140939 A1 claims, examples WO 2013/012476 A2 EP 2734184 A2 CN 103732211 A | | | |
| CN | 110669205 | A | 10 January 2020 | (Family: none) | | | |
| JP | 2018-193435 | A | 06 December 2018 | (Family: none) | | | |
| JP | 2004-518006 | A | 17 June 2004 | US 2003/0065084 A1 claims, examples WO 2002/059181 A2 EP 1358248 A2 KR 10-2005-0018675 A | | | |
| JP | 2010-090188 | A | 22 April 2010 | (Family: none) | | | |
| JP | 2018-003002 | A | 11 January 2018 | (Family: none) | | | |
| JP | 2003-113342 | A | 18 April 2003 | US 2002/0077410 A1 claims, examples KR 10-2002-0018620 A | | | |

Form PCT/ISA/210 (patent family annex) (January 2015)

**REFERENCES CITED IN THE DESCRIPTION**

**Patent documents cited in the description**

- WO 2022097747 A
- JP 2002212125 A
- JP 2012111832 A
- JP 85 A